# EUROPÄISCHE PATENTSCHRIFT

(11) **EP 4 289 030 B1**
(45) Veröffentlichungstag und Bekanntmachung des Hinweises auf die Patenterteilung: **13.05.2026**
(21) Anmeldenummer: 22703272.9
(22) Anmeldetag: 28.01.2022
(51) Int. Cl.: H02G 3/08, H02G 3/12, H02G 3/14, H02G 3/18, H01R 13/447

(54) **DOSENGEHÄUSE; VERFAHREN ZUR BEDIENUNG EINES DOSENGEHÄUSES**
SOCKET HOUSING, METHOD FOR OPERATING A SOCKET HOUSING
BOÎTIER DE PRISE, PROCÉDÉ DE FONCTIONNEMENT D'UN BOÎTIER DE PRISE

(30) Priorität: 08.02.2021 DE 102021102878; 12.03.2021 DE 102021106042
(43) Veröffentlichungstag der Anmeldung: 13.12.2023
(73) Patentinhaber: Bachmann GmbH, 70565 Stuttgart (DE)
(72) Erfinder: ELBERT, Patrick, 71229 Leonberg (DE); BROMMER, Stefan, 71732 Tamm (DE)
(74) Vertreter: Patentanwälte Schuster, Müller & Partner mbB
(86) Internationale Anmeldenummer: PCT/DE2022/100078
(87) Internationale Veröffentlichungsnummer: WO 2022/167039

(56) Entgegenhaltungen:
- DE-A1- 102007 051 053
- DE-A1- 102013 000 829
- DE-A1- 102018 009 948
- DE-B3- 10 246 654
- DE-B4- 102007 063 585
- DE-B4- 102012 025 533
- DE-U1- 202015 103 222

## Beschreibung

### Stand der Technik

Die Erfindung geht aus von einem Dosengehäuse, nach der Gattung des Anspruchs 1, und einem Verfahren zur Bedienung eines Dosengehäuses, nach der Gattung des Anspruchs 18.

Dosengehäuse gibt es in vielfältigen Ausführungen. So sind aus dem Stand der Technik insbesondere Mehrfachsteckdosengehäuse für kabelgebundene Mehrfachsteckdosen, Aufputzdosengehäuse und Einbaugehäuse, die zum Einbau in eine Wand, einen Boden, eine Decke und/oder ein Möbel, nämlich beispielsweise in eine Arbeitsplatte, insbesondere in eine Küchenarbeitsplatte, verwendet werden, bekannt. Dosengehäuse können unterschiedlich bestückt sein, sodass sie mindestens eine Steckdose, mindestens ein Informationsanschluss und/oder mindestens ein Schalter aufweisen können. Auch bei den Steckdosen gibt es unterschiedliche Ausführungsformen, so dass Steckdosen mit erhöhtem Berührschutz oder mit einer Steckereinführhilfe, durch die ein Einstecken des Steckers in die Steckdose erleichtert wird, da die richtige Einsteckposition durch ein Einführen des Steckers in den Steckdosentopf und ein Verdrehen des Steckers innerhalb des Steckdosentopf bis die Kontaktstifte des Steckers in den Kontaktöffnungen der Steckdose verrasten ermittelbar ist, vorbekannt sind.

Diese Steckdosengehäuse und insbesondere die Einbaugehäuse, die auch als Einbausteckdosen bezeichnet werden und die beispielsweise in eine Küchenplatte eingebaut werden, haben den Nachteil, dass in dem nach oben gerichteten Dosentopf Schmutz, Fremdkörper oder Feuchtigkeit eindringen könnte, falls kein Stecker in der Dose eingesteckt sein sollte.

Daher wird in der Offenlegungsschrift DE 10 2004 051 064 A1 und dem Gebrauchsmuster DE 20 2015 103 222 U1 eine Vorrichtung vorgeschlagen, die zur Aufnahme mindestens eines Steckdoseneinsatzes dient und mit einem Deckel verschließbar ist. Nachteilig ist, dass der Deckel jederzeit geöffnet werden kann und nicht dichtend schließt.

In der Offenlegungsschrift DE 24 58 243 A1 wird eine Schutzvorrichtung für Installationselemente, insbesondere elektrische Installationselemente, wie Steckdosen, Schalter odgl., beschrieben. Die Schutzvorrichtung weist eine Abdeck-Klappe auf, durch die die Installationselemente unzugänglich verdeckt werden. An der Abdeck-Klappe ist eine verdrehbare Deckelplatte angeordnet, die einen Sicherheitsriegel aufweist, durch den das Öffnen der Abdeck-Klappe nur in einer bestimmten Stellung ermöglicht wird. Nachteilig ist, dass die Abdeck-Klappe zum Öffnen nach oben geschwenkt wird, so dass sie, da sie in der Öffnungsposition über die übrigen Bauteile vorsteht, gegebenenfalls im geöffneten Zustand stört.

In der Patentschrift DE 10 2007 063 585 B4 wird eine Steckdose beschrieben, die einen in ein Frontelement integrierten Verschluss aufweist, der aus mehreren Verschlusselementen besteht. Die Verschlusselemente sind über ein Festlager bewegbar angeordnet, wobei die Bewegung radial ein- oder auswärts gegenüber dem Mittelpunkt des Frontelementes erfolgt. Vorteilhaft ist, dass dadurch das Frontelement sehr flach bauend ausgestaltet werden kann. Nachteilig ist allerdings der konstruktive Aufwand zu bewerten.

Konstruktiv aufwändig sind auch die in der Gebrauchsmusterschrift DE 202 09 189 U1, Patentschrift US 6 542 218 B1 und der Gebrauchsmusterschrift DE 93 15 394 U1 beschriebenen verschließbaren Steckdosen.

Aus der Patentschrift DE 10 2012 025 533 B4 ist ein Einbaugehäuse zum Einbau in ein Möbel, eine Wand, einen Boden und/oder eine Decke bekannt, das mindestens einen durch eine Gehäusewandung begrenzten Innenraum aufweist, in dem mindestens eine Steckdose, mindestens ein Informationsanschluss und/oder mindestens ein Schalter untergebracht ist, wobei eine den Innenraum abdeckende Abdeckung mindestens eine durch einen Verschluss verschließbare Öffnung aufweist und die Abdeckung beweglich an der Gehäusewandung angeordnet ist, so dass die Abdeckung bei einem entriegelten Verschluss um eine senkrecht auf den Innenraum ausgerichtete Drehachse drehbar an der Gehäusewandung angeordnet ist. Nachteilig ist hierbei, das ein Benutzer ein gewisses händisches Geschick aufweisen muss, um gleichzeitig während des Drückens des Entriegelungsknopfes die Abdeckung zu verdrehen.

Aus der Offenlegungsschrift DE 10 2018 009 948 A1 ist ein Einbaugehäuse bekannt, das zur Freigabe von Steckdosen einen mittig zwischen den verschließbaren Steckdosen angeordneten Betätigungsknopf einer Bedieneinrichtung aufweist, durch den ein Verschluss verdreht werden kann. Nachteilig ist hierbei ein mit der Verdrehung des Verschlusses einhergehendes Verletzungsrisiko des Anwenders.

Der Erfindung liegt daher die Aufgabe zugrunde, eine die Nachteile des Standes der Technik überwindendes Dosengehäuse und ein die Nachteile des Standes der Technik überwindendes Verfahren zur Bedienung eines Dosengehäuses bereitzustellen.

### Die Erfindung und ihre Vorteile

Das erfindungsgemäße Dosengehäuse, mit den Merkmalen des Anspruchs 1, und das erfindungsgemäße Verfahren zur Bedienung eines Dosengehäuses, mit den Merkmalen des Anspruchs 18, haben demgegenüber den Vorteil, dass das erfindungsgemäße Dosengehäuse ein mindestens teilweise geschlossenen Gehäuse und mindestens eine Bedienvorrichtung aufweist, wobei das Gehäuse mindestens einen Innenraum aufweist, in dem mindestens eine Steckdose, mindestens ein Informationsanschluss und/oder mindestens ein Schalter untergebracht ist, wobei an mindestens einer Seite des Gehäuses ein Deckel angeordnet ist, der einen Innenraum abdeckt und der mindestens eine durch einen Verschluss verschließbare Öffnung aufweist, wobei mindestens eine Öffnung eine die Öffnung verschließende Sperrstellung und eine die Öffnung freigebende Freigabestellung aufweist und wobei der Deckel und/oder mindestens ein Verschluss, der eine Verschlussstellung und eine Offenstellung aufweist, direkt oder indirekt zum Freigeben oder zum Sperren mindestens einer Öffnung beweglich an dieser Seite des Gehäuses angeordnet ist, wobei der Deckel und/oder ein in einem Innenraum angeordnetes Steckdosengehäuse für mindestens eine Steckdose und/oder mindestens ein Informationsanschluss und/oder mindestens ein Schalter oder der Deckel und mindestens ein Verschluss um eine auf den Innenraum ausgerichtete Drehachse in mindestens eine Drehrichtung drehbar an dieser Seite des Gehäuses angeordnet ist und das Dosengehäuse mindestens einen Antrieb aufweist, der die Drehbewegung des Deckels und/oder des Steckdosengehäuses oder des Deckels und des mindestens einen Verschlusses beim Freigeben oder Sperren mindestens einer Öffnung in mindestens eine Drehrichtung unterstützt.

Denkbar wäre auch, dass das erfindungsgemäße Dosengehäuse eine Hinderniserkennung aufweist, so dass beispielsweise eine Steckdose, in die ein Stecker eingesteckt ist, oder in der sich ein Hindernis (z.B. ein Finger) befindet, dazu führt, dass die Steckdose nicht verschlossen werden kann. Hierbei wird das Verschließen entweder von vornherein unterbunden oder spätestens dann abgebrochen, wenn der Verschluss das Hindernis (z.B. Stecker, Kabel, Finger) berührt. Denkbar ist auch, dass sich nach dem Abbruch des Verschließvorganges ein Öffnungsvorgang anschließt.

Bevorzugt wird die Drehung des Steckdosengehäuses, die ggfls. zusammen mit einem an dem Steckdosengehäuse angeordneten Verschluss erfolgen kann, in mindestens eine Drehrichtung direkt oder indirekt durch eine Bedienvorrichtung, z.B. eine Bedienvorrichtung, die zumindest teilweise außerhalb des Gehäuses angeordnet ist und/oder zumindest teilweise eine dem Innenraum abgewandte Oberseite des Deckels überragt, ausgelöst. Durch die Verdrehung besteht die Möglichkeit, dass vor oder nach der Betätigung der Bedienvorrichtung ein Verwender eine von ihm benötigte Steckdose, einen von ihm benötigten Informationsanschluss oder einen von ihm benötigten Schalter an eine Position verdrehen kann, in der die ausgewählte Steckdose, der ausgewählte Informationsanschluss oder der ausgewählte Schalter durch eine in Freigabestellung befindliche Öffnung des Deckels zugänglich ist. Bevorzugt wird das Steckdosengehäuse in beide Drehrichtungen durch mindestens einen Antrieb, insbesondere durch mindestens einen Federmechanismus, verdreht.

Nach einer vorteilhaften Ausgestaltung des erfindungsgemäßen Dosengehäuses ist mindestens ein Antrieb ein Federmechanismus oder ein Elektroantrieb. Der mindestens eine Antrieb steht direkt oder indirekt mit dem Deckel und/oder mit mindestens einem Verschluss in Verbindung und unterstützt die Bewegung des Deckels und/oder des mindestens einen Verschlusses zum Öffnen und/oder zum Verschließen mindestens einer Öffnung.

Der Federmechanismus ist dabei derart ausgelegt, dass er insbesondere zwei Probleme einer herkömmlichen, einfach eingelegten Feder löst. Das erste Problem besteht darin, dass eine einfach eingelegte Feder nicht vorgespannt werden kann. Da ein Einsatz unter Vorspannung nicht möglich ist, können vor allem beim Montieren und beim Wechseln des Deckel Fehler auftreten (z. B. richtige Höhe des Drehmoment einstellen, Richtung der Federkraft einstellen). Das zweite Problem besteht darin, dass sofern eine Vorspannung vorgenommen werden könnte, die vorgespannte Feder bei der Montage (z. B. im Werk, vor allem auch beim Wechsel des Deckels durch den Kunden) ein Verletzungsrisiko darstellen könnte, da sie eventuell unkontrolliert aus dem Gehäuse springt.

Nach einer diesbezüglichen vorteilhaften Ausgestaltung des erfindungsgemäßen Dosengehäuses ist mindestens ein Federmechanismus vor der Betätigung der Bedienvorrichtung zumindest teilweise gespannt.

Nach einer zusätzlichen vorteilhaften Ausgestaltung des erfindungsgemäßen Dosengehäuses ist das erfindungsgemäße Dosengehäuse ein Mehrfachsteckdosengehäuse, ein Aufputzdosengehäuse oder ein Einbaugehäuse, das zum Einbau in eine Wand, einen Boden, eine Decke und/oder ein Möbel, nämlich beispielsweise in eine Arbeitsplatte, insbesondere in eine Küchenarbeitsplatte, verwendet wird.

Nach einer zusätzlichen vorteilhaften Ausgestaltung des erfindungsgemäßen Dosengehäuses ist die Drehachse des Deckels und/oder mindestens eines Verschlusses senkrecht auf den Innenraum ausgerichtet.

Nach einer vorteilhaften Ausgestaltung des erfindungsgemäßen Dosengehäuses ist der Deckel und/oder mindestens ein Verschluss in beide Drehrichtungen durch mindestens einen Antrieb, insbesondere durch mindestens einen Federmechanismus, verdrehbar.

Nach einer vorteilhaften Ausgestaltung des erfindungsgemäßen Dosengehäuses ist der Deckel und/oder mindestens ein Verschluss in eine Drehrichtung oder in beide Drehrichtungen manuell verdrehbar.

Nach einer zusätzlichen vorteilhaften Ausgestaltung des erfindungsgemäßen Dosengehäuses weist das Dosengehäuse zur Begrenzung der Drehung mindestens einen Anschlag auf.

Nach einer diesbezüglichen vorteilhaften Ausgestaltung des erfindungsgemäßen Dosengehäuses ist mindestens ein Anschlag an einer auf den Innenraum ausgerichteten Seite des Deckels oder an dem Gehäuse angeordnet.

Nach einer zusätzlichen vorteilhaften Ausgestaltung des erfindungsgemäßen Dosengehäuses ist mindestens ein Antrieb, insbesondere mindestens einen Federmechanismus, zentral oder dezentral an der Seite des Gehäuses angeordnet.

Nach einer zusätzlichen vorteilhaften Ausgestaltung des erfindungsgemäßen Dosengehäuses weist der Federmechanismus mindestens eine Feder und zusätzlich mindestens eine Federachse (Federhalterung), mindestens ein Kugellager, mindestens einen Rotationsdämpfer und/oder mindestens einen Federmechanismusdeckel auf.

Nach einer diesbezüglichen vorteilhaften Ausgestaltung des erfindungsgemäßen Dosengehäuses weist die Feder einen radialen und einen axialen Schenkel auf. Bevorzugt wird die Feder in einem Zylinder (Hülle, Käfig, Kartusche), der ein eigenes Bauteil oder ein Bestandteil der Bedienvorrichtung sein kann, gefasst und der einen Schenkel fixiert und den anderen beweglich lässt. Bevorzugt ist der radiale Schenkel der Feder dabei in einem Langloch (z. B. ca. 90°) beweglich, um den Antrieb zu gewährleisten.

Über die Länge des Langlochs kann man den Anschlag steuern. Es sind also fast beliebige Winkel denkbar. Der axiale Schenkel wird im (evtl. ringförmigen) "Boden" durch eine Bohrung geführt und gehalten. Der Boden kann auch ein separates Teil sein, das man einklipst oder mit Schrauben fixiert. Zusätzlich könnte man durch einen inneren, zweiten Zylinder (Hülle, Käfig, Kartusche) die Feder stützen (z. B. gegen axiales Einknicken). Vorteilhaft ist, dass eine derart gekapselte Feder beim Einsetzen auf ein definiertes Drehmoment vorgespannt werden kann. Damit ist das Federelement auf ein definiertes Drehmoment vorgespannt und kann einfach und ungefährlich eingesetzt bzw. entnommen werden.

Nach einer zusätzlichen vorteilhaften Ausgestaltung des erfindungsgemäßen Dosengehäuses ist der Federmechanismus in eine Bedienvorrichtung integriert.

Nach einer zusätzlichen vorteilhaften Ausgestaltung des erfindungsgemäßen Dosengehäuses weist der Federmechanismus mindestens eine Konstantkraftfeder oder mindestens eine Schraubenfeder auf.

Nach einer zusätzlichen vorteilhaften Ausgestaltung des erfindungsgemäßen Dosengehäuses ist der Deckel einteilig und unter Beibehaltung der Drehfähigkeit des Deckels mittels mindestens einer Verriegelungsvorrichtung mit dem Gehäuse verbunden und/oder ist der Deckel mehrteilig und unter Beibehaltung der Drehfähigkeit des Deckels mindestens ein Teil des Deckels mittels mindestens einer Verriegelungsvorrichtung mit dem Gehäuse verbunden.

Nach einer diesbezüglichen vorteilhaften Ausgestaltung des erfindungsgemäßen Dosengehäuses ist zumindest ein Teil des Deckels lösbar mittels mindestens einer Verriegelungsvorrichtung mit mindestens einem anderen Teil des Deckels und/oder dem Gehäuse verbunden.

Nach einer zusätzlichen vorteilhaften Ausgestaltung des erfindungsgemäßen Dosengehäuses ist mindestens eine Verriegelungsvorrichtung an dem Gehäuse angeordnet.

Nach einer diesbezüglichen vorteilhaften Ausgestaltung des erfindungsgemäßen Dosengehäuses ist mindestens eine Verriegelungsvorrichtung durch eine durch einen Verschluss verschließbare Öffnung bedienbar. Somit muss die Öffnung zumindest etwas geöffnet sein, damit ein Verwender durch die Öffnung hindurch die Verriegelungsvorrichtung bedienen kann.

Nach einer zusätzlichen vorteilhaften Ausgestaltung des erfindungsgemäßen Dosengehäuses weist der Deckel eine Nut und/oder einen Schlitz auf, die in Wirkverbindung mit einer Verriegelungsvorrichtung bringbar sind. Somit kann zum Verriegeln des Deckels an dem Gehäuse ein Riegel in eine am Deckel angeordnete Nut und/oder in einen am Deckel angeordneten Schlitz geschoben werden.

Nach einer zusätzlichen vorteilhaften Ausgestaltung des erfindungsgemäßen Dosengehäuses weist der Deckel eine Deckelscheibe und/oder eine Führung auf. Bevorzugt steht der Antrieb mit der Führung in Wirkverbindung.

Nach einer diesbezüglichen vorteilhaften Ausgestaltung des erfindungsgemäßen Dosengehäuses ist die Führung auf einer dem Innenraum zugewandten Seite des Deckels angeordnet.

Nach einer diesbezüglichen vorteilhaften Ausgestaltung des erfindungsgemäßen Dosengehäuses ist die Führung lösbar an dem restlichen Deckel angeordnet. Bevorzugt ist die Führung lösbar an der Deckelscheibe angeordnet.

Nach einer zusätzlichen vorteilhaften Ausgestaltung des erfindungsgemäßen Dosengehäuses weist die Führung zumindest teilweise einen Zahnkranz auf. Bevorzugt steht mindestens ein Antrieb, insbesondere mindestens ein Federmechanismus, mit dem Zahnkranz in Wirkverbindung.

Nach einer zusätzlichen vorteilhaften Ausgestaltung des erfindungsgemäßen Dosengehäuses ist mindestens eine Steckdose, mindestens ein Informationsanschluss und/oder mindestens ein Schalter als auswechselbarer Einsatz ausgestaltet. Bevorzugt wird ein auswechselbarer Einsatz in dem Gehäuse verklipst und/oder verschraubt. Dadurch ist eine Anpassung an die Verwenderbedürfnisse möglich.

Nach einer zusätzlichen vorteilhaften Ausgestaltung des erfindungsgemäßen Dosengehäuses ist mindestens ein Verschluss einer Öffnung an dem Gehäuse angeordnet.

Nach einer zusätzlichen vorteilhaften Ausgestaltung des erfindungsgemäßen Dosengehäuses weist mindestens ein Verschluss und/oder mindestens eine Bedienvorrichtung eine Feder auf. Mindestens ein Verschluss und/oder mindestens eine Bedienvorrichtung sind somit federbelastet.

Nach einer zusätzlichen vorteilhaften Ausgestaltung des erfindungsgemäßen Dosengehäuses ist mindestens eine Bedienvorrichtung zumindest teilweise außerhalb des Gehäuses angeordnet und/oder überragt mindestens eine Bedienvorrichtung zumindest teilweise die dem Innenraum abgewandte Oberseite des Deckels. Denkbar ist, dass mindestens ein Verschluss, der eine Verschlussstellung und eine Offenstellung aufweist, direkt oder indirekt durch eine Bedienvorrichtung, die zumindest teilweise außerhalb des Gehäuses angeordnet ist bzw. die zumindest teilweise die dem Innenraum abgewandte Oberseite des Deckels überragt, aus der Verschlussstellung in die Offenstellung bzw. aus der Offenstellung in die Verschlussstellung bewegbar ist, und/oder mehrere Verschlüsse durch eine gemeinsame Bedienvorrichtung, die zumindest teilweise außerhalb des Gehäuses angeordnet ist bzw. die zumindest teilweise die dem Innenraum abgewandte Oberseite des Deckels überragt, aus der Verschlussstellung in die Offenstellung bzw. aus der Offenstellung in die Verschlussstellung bewegbar sind, und/oder mehrere Verschlüsse durch mindestens zwei Bedienvorrichtungen, von denen mindestens eine Bedienvorrichtung zumindest teilweise außerhalb des Gehäuses angeordnet ist bzw. die zumindest teilweise die dem Innenraum abgewandte Oberseite des Deckels überragt, aus der Verschlussstellung in die Offenstellung bzw. aus der Offenstellung in die Verschlussstellung bewegbar sind. Bevorzugt weist der Deckel an seiner Oberseite bis auf eine oder mehrere Öffnungen, die durch einen Verschluss verschließbar ist bzw. sind, keine weitere Öffnung, insbesondere keine Öffnung, für eine Bedienvorrichtung, bzw. keine weiteren Öffnungen auf.

Nach einer zusätzlichen vorteilhaften Ausgestaltung des erfindungsgemäßen Dosengehäuses ist in mindestens einem Innenraum ein Steckdosengehäuse für mindestens eine Steckdose, mindestens ein Informationsanschluss und/oder mindestens ein Schalter angeordnet. Bevorzugt ist mindestens eine Steckdose, mindestens ein Informationsanschluss und/oder mindestens ein Schalter des Steckdosengehäuses als auswechselbarer Einsatz ausgestaltet. Bevorzugt wird ein auswechselbarer Einsatz in dem Gehäuse verklipst und/oder verschraubt. Dadurch ist eine Anpassung an die Verwenderbedürfnisse möglich.

Nach einer zusätzlichen vorteilhaften Ausgestaltung des erfindungsgemäßen Dosengehäuses ist das Steckdosengehäuse mit mindestens einem drehbaren Verschluss verbunden. Bevorzugt weist das Steckdosengehäuse mindestens eine Vertiefung zur Aufnahme eines Verschlusses auf.

Nach einer vorteilhaften Ausgestaltung des erfindungsgemäßen Verfahrens zur Bedienung eines Dosengehäuses, das ein mindestens teilweise geschlossenen Gehäuse und mindestens eine Bedienvorrichtung aufweist, wobei das Gehäuse mindestens einen Innenraum aufweist, in dem mindestens eine Steckdose, mindestens ein Informationsanschluss und/oder mindestens ein Schalter untergebracht ist, wobei an mindestens einer Seite des Gehäuses ein Deckel angeordnet ist, der einen Innenraum abdeckt und der mindestens eine durch einen Verschluss verschließbare Öffnung aufweist, wobei mindestens eine Öffnung eine die Öffnung verschließende Sperrstellung und eine die Öffnung freigebende Freigabestellung aufweist und wobei der Deckel und/oder mindestens ein Verschluss zum Freigeben oder zum Sperren mindestens einer Öffnung beweglich an dieser Seite des Gehäuses angeordnet ist, und wobei durch Betätigung mindestens einer Bedienvorrichtung mindestens ein Verschluss direkt oder indirekt aus einer eine die Öffnung verschließende Verschlussstellung in eine die Öffnung freigebende Freigabestellung bzw. aus einer die Öffnung freigebende Freigabestellung in eine die Öffnung verschließende Verschlussstellung verbracht wird, wobei der Deckel und/oder ein in einem Innenraum angeordnetes Steckdosengehäuse für mindestens eine Steckdose und/oder mindestens ein Informationsanschluss und/oder mindestens ein Schalter oder der Deckel und mindestens ein Verschluss um eine auf den Innenraum ausgerichtete Drehachse in mindestens eine Drehrichtung drehbar an dieser Seite des Gehäuses angeordnet ist und das Dosengehäuse mindestens einen Antrieb aufweist, der die Drehbewegung des Deckels und/oder des Steckdosengehäuses oder des Deckels und des mindestens einen Verschlusses beim Freigeben oder Sperren mindestens einer Öffnung in mindestens eine Drehrichtung zumindest zeitweise unterstützt, wird bei Bewegung des Deckels und/oder des Steckdosengehäuses oder des Deckels und mindestens eines Verschlusses, durch die mindestens eine Öffnung aus ihrer die Öffnung verschließende Verschlussstellung in eine die Öffnung freigebende Freigabestellung bzw. aus einer die Öffnung freigebende Freigabestellung in eine die Öffnung verschließende Verschlussstellung verbracht wird, mindestens ein Antrieb, insbesondere mindestens ein Federmechanismus, zumindest teilweise gespannt oder zumindest teilweise entspannt. Somit ist der Einsatz eines Dosengehäuses denkbar, bei dem durch Betätigung einer Bedienvorrichtung der Deckel verdrehbar wird, wodurch mindestens eine Öffnung aus ihrer Sperrstellung in ihre Freigabestellung bzw. aus ihrer Freigabestellung in ihre Sperrstellung gelangt. Denkbar ist, dass die Verdrehung federunterstützt (automatisch) erfolgt, wodurch sich während der Drehung die Feder zumindest teilweise entspannt. Denkbar ist auch, dass die Verdrehung manuell erfolgt, wodurch die Feder zumindest teilweise gespannt wird. Somit wird bei Bewegung des Deckels und/oder des Steckdosengehäuses oder des Deckels und des mindestens einen Verschlusses und/oder ggfls. des Steckdosengehäuses in mindestens eine Drehrichtung mindestens ein Federmechanismus zumindest teilweise gespannt und/oder zumindest teilweise entspannt.

Nach einer zusätzlichen vorteilhaften Ausgestaltung des erfindungsgemäßen Verfahrens wird nach der erstmaligen Betätigung der Bedienvorrichtung, durch den der Deckel und/oder das Steckdosengehäuse oder der Deckel und mindestens ein Verschluss und/oder ggfls. das Steckdosengehäuse bevorzugt bis zu einem Anschlag in eine Drehrichtung bewegt wird, mindestens durch eine erneute Betätigung der Bedienvorrichtung der Deckel und/oder das Steckdosengehäuse oder der Deckel und mindestens ein Verschluss und/oder ggfls. das Steckdosengehäuse in die selbe Drehrichtung bevorzugt bis zu einem Anschlag bewegt. Die Drehbewegung ist dabei federbelastet oder manuell denkbar. Dadurch ist ein stufenweises Weiterschalten des Deckels und/oder des Steckdosengehäuses und/oder des Deckels und mindestens eines Verschlusses gewährleistet.

Nach einer zusätzlichen vorteilhaften Ausgestaltung des erfindungsgemäßen Verfahrens ist der Deckel, mindestens ein Teil des Deckels und/oder mindestens ein Verschluss austauschbar. Somit können der Deckel, mindestens ein Teil des Deckels und/oder der oder die Verschlüsse designtechnisch an die Umgebung angepasst werden bzw. nach einer eventuellen Beschädigung ausgetauscht werden. Der Deckel, mindestens ein Teil des Deckels und/oder mindestens ein Verschluss werden somit insbesondere für den Verwender zum austauschbaren Ersatzteil.

Nach einer zusätzlichen vorteilhaften Ausgestaltung des erfindungsgemäßen Verfahrens weist mindestens eine Öffnung eine die Öffnung verschließende Sperrstellung und eine die Öffnung freigebende Freigabestellung auf, wobei zum Wechsel zwischen der Sperrstellung und der Freigabestellung bzw. der Freigabestellung und der Sperrstellung der Deckel und/oder ein Steckdosengehäuse oder der Deckel und mindestens ein Verschluss bewegt werden.

Nach einer zusätzlichen vorteilhaften Ausgestaltung des erfindungsgemäßen Verfahrens wird als Dosengehäuse ein Dosengehäuse, gemäß einem Ansprüche 1 bis 17, eingesetzt.

Weitere Vorteile und vorteilhafte Ausgestaltungen der Erfindung sind der nachfolgenden Beschreibung und den Zeichnungen entnehmbar.

### Zeichnungen

Bevorzugte Ausführungsbeispiele des erfindungsgemäßen Gegenstands sind in den Zeichnungen dargestellt und werden im Folgenden näher erläutert. Es zeigen
- Fig. 1: eine perspektivische Darstellung eines erfindungsgemäßen Dosengehäuses im geschlossenen Zustand,
- Fig. 2: eine perspektivische Darstellung des erfindungsgemäßen Dosengehäuses, gemäß Fig. 1, im geöffneten Zustand,
- Fig. 3: eine perspektivische Explosionsdarstellung eines erfindungsgemäßen Dosengehäuses,
- Fig. 4: eine perspektivische Darstellung einer Verriegelungsvorrichtung des erfindungsgemäßen Dosengehäuses, gemäß Fig. 1,
- Fig. 5: skizzenhaft eine perspektivische Darstellung des erfindungsgemäßen Dosengehäuses im geöffneten Zustand,
- Fig. 6: skizzenhaft eine perspektivische Darstellung einer Unterseite des erfindungsgemäßen Dosengehäuses, gemäß Fig. 5,
- Fig. 7: skizzenhaft eine perspektivische Darstellung des erfindungsgemäßen Dosengehäuses, gemäß Fig. 5, ohne Deckelscheibe,
- Fig. 8: skizzenhaft eine perspektivische Darstellung des erfindungsgemäßen Dosengehäuses, gemäß Fig. 5, ohne Deckelscheibe, ohne Federmechanismusdeckel und ohne Feder,
- Fig. 9: eine perspektivische Darstellung eines Gehäuses 2 des erfindungsgemäßen Dosengehäuses 1, gemäß Fig. 3,
- Fig. 10: eine perspektivische Darstellung einer Unterseite der Deckelscheibe des erfindungsgemäßen Dosengehäuses, gemäß Fig. 3,
- Fig. 11: eine perspektivische Darstellung einer Unterseite eines weiteren Ausführungsbeispiels einer Deckelscheibe eines erfindungsgemäßen Dosengehäuses,
- Fig. 12: eine Draufsicht des erfindungsgemäßen Dosengehäuses, gemäß Fig. 1, von oben,
- Fig. 13: eine Draufsicht eines weiteren Ausführungsbeispiels eines erfindungsgemäßen Dosengehäuses,
- Fig. 14: eine perspektivische Darstellung einer Unterseite des erfindungsgemäßen Dosengehäuses, gemäß Fig. 13,
- Fig. 15: eine Schnittansicht des Deckels und der Verriegelungsvorrichtung eines erfindungsgemäßen Dosengehäuses,
- Fig. 16: eine Draufsicht auf einen Führungsring eines Deckels eines erfindungsgemäßen Dosengehäuses, von unten,
- Fig. 17: eine Schnittansicht einer Lasche für eine Feder, insbesondere eine Konstantkraftfeder, gemäß Ausschnitt A aus Fig, 16,
- Fig. 18: eine Draufsicht auf einen Führungsring eines Deckels eines erfindungsgemäßen Dosengehäuses, von oben,
- Fig. 19: eine perspektivische Darstellung auf den Führungsring des Deckels eines erfindungsgemäßen Dosengehäuses, gemäß Fig. 18,
- Fig. 20: eine Schnittansicht eines Federmechanismus eines erfindungsgemäßen Dosengehäuses,
- Fig. 21: eine perspektivische Explosionsdarstellung des Federmechanismus eines erfindungsgemäßen Dosengehäuses, gemäß Fig. 20,
- Fig. 22: eine weitere perspektivische Explosionsdarstellung des Federmechanismus eines erfindungsgemäßen Dosengehäuses, gemäß Fig. 20,
- Fig. 23: eine perspektivische Darstellung einer Federachse des Federmechanismus eines erfindungsgemäßen Dosengehäuses, gemäß Fig. 20,
- Fig. 24: eine perspektivische Explosionsdarstellung eines weiteren Ausführungsbeispiels eines Federmechanismus eines erfindungsgemäßen Dosengehäuses,
- Fig. 25: eine perspektivische Darstellung des Federmechanismus eines erfindungsgemäßen Dosengehäuses, gemäß Fig. 24,
- Fig. 26: eine perspektivische Darstellung der Unterseite einer Deckelscheibe, an der ein Federmechanismus eines erfindungsgemäßen Dosengehäuses, gemäß Fig. 25, angeordnet ist,
- Fig. 27: eine Draufsicht auf die Deckelscheibe eines Deckels eines erfindungsgemäßen Dosengehäuses, von oben,
- Fig. 28: eine Schnittansicht des Federmechanismus, gemäß Fig. 24, entlang der Linie A - A,
- Fig. 29: eine Seitenansicht des Federmechanismus, gemäß Fig. 24,
- Fig. 30: eine perspektivische Darstellung einer Unterseite der Deckelscheibe nebst Feder und Boden,
- Fig. 31: eine perspektivische Detailansicht, gemäß Ausschnitt B aus Fig. 30,
- Fig. 32: eine perspektivische Explosionsdarstellung eines Federmechanismus eines erfindungsgemäßen Dosengehäuses,
- Fig. 33: eine perspektivische Schnittansicht des Federmechanismus, gemäß Fig. 32,
- Fig. 34: eine perspektivische Skizze einer Hülle für eine Feder,
- Fig. 35: eine perspektivische Darstellung eines erfindungsgemäßen Dosengehäuses,
- Fig. 36: eine perspektivische Darstellung des erfindungsgemäßen Dosengehäuses, gemäß Fig. 35, bei Betätigung einer Bedienvorrichtung und
- Fig. 37: eine perspektivische Darstellung des erfindungsgemäßen Dosengehäuses, gemäß Fig. 35, bei Drehung des Deckels.

### Beschreibung der Ausführungsbeispiele

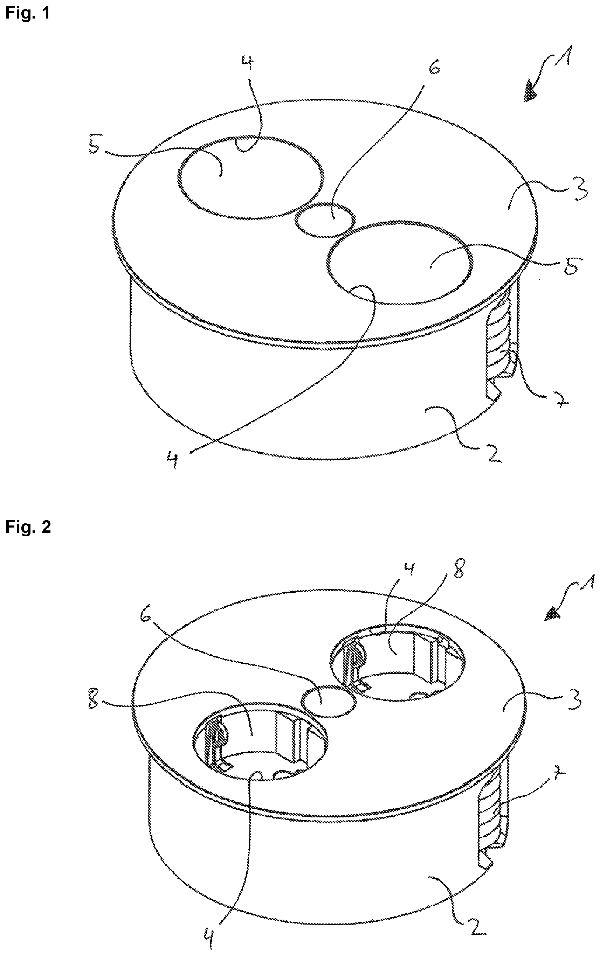

Fig. 1 zeigt eine perspektivische Darstellung eines erfindungsgemäßen Dosengehäuses 1 im geschlossenen Zustand. Das erfindungsgemäße Dosengehäuses 1 weist eine Gehäuse 2 auf, das an einer nach oben gerichteten Seite mit einem Deckel 3 (Abdeckung, Abdeckscheibe) abgedeckt ist. Der Deckel 3 weist Öffnungen 4 auf, die durch Verschlüsse 5 verschlossen sind. Die Verschlüsse 5 sind mit einer Bedienvorrichtung 6 (Entriegelung, Zentrumsknopf, Raster, Riegel) verbunden, so dass sich die Verschlüsse 5, wenn die Bedienvorrichtung 6 nach unten gedrückt wird, ebenfalls nach unten und damit aus der Öffnung 4 heraus bewegen. Bevorzugt ist die Bedienvorrichtung 6 eine mechanisch auslösbare Bedienvorrichtung 6. Durch die Freigabe der Öffnungen 4 ist der Deckel 3 oder der Deckel 3 und mindestens ein Verschluss 5 verdrehbar. Das erfindungsgemäße Dosengehäuse 1 kann somit nicht versehentlich geöffnet werden, da der Deckel 3, bedingt durch die in den Öffnungen 4 befindlichen Verschlüsse 5 an dem Gehäuse 2 fixiert ist, bzw. die in den Öffnungen 4 fxierten Verschlüsse 5 erst verdreht werden können, wenn die Bedienvorrichtung 6, die im vorliegenden Ausführungsbeispiel mittig angeordnet ist, niedergedrückt wurde.

Das erfindungsgemäße Dosengehäuses 1 ist als Einbaugehäuse ausgestaltet, so dass es beispielsweise in eine nicht dargestellte Arbeitsplatte eingebaut werden kann. Bevorzugt ist das Einbaugehäuse durch Exzenterschrauben 7 von unten an der nicht dargestellten Arbeitsplatte fixierbar. Denkbar ist auch, dass die Exzenterschrauben 8 von oben bedient werden oder dass die Exzenterschrauben 7 beidseitig bedient werden können. Eine Befestigung von oben ist bevorzugt möglich, wenn der Deckel 3 und/oder mindestens ein Verschluss 5 leicht verdreht ist, so dass dadurch die Exzenterschrauben 7 freigelegt und erreichbar werden.

Fig. 2 zeigt eine perspektivische Darstellung des erfindungsgemäßen Dosengehäuses 1, gemäß Fig. 1, im geöffneten Zustand, wobei es sich bei dem erfindungsgemäßen Dosengehäuses 1 um ein Dosengehäuse 1 handelt, bei dem der Deckel 3 verdrehbar ist. Hierbei ist der Deckel 3 derart verdreht, dass im Innenraum des Gehäuses 2 angeordnete Steckdosen 8 zugänglich sind, so dass Stecker in die Dosentöpfe eingesteckt werden können.

Statt herkömmlichen Steckdosen 8 sind, unabhängig davon, ob sich der Deckel 3 und/oder mindestens ein Verschluss 5 verdrehen lässt, selbstverständlich auch andere Dosen beispielsweise für Informationsanschlüsse (z.B. LAN-Dose), PC-Anschlüsse, TV-Anschlüsse (z.B. Scart-Anschlüsse), Lautsprecher, Schalter, odgl. denkbar. Selbstverständlich sind auch Kombinationen von diesen denkbar, so dass beispielsweise eine Einfachsteckdose mit einem Medienanschlussfeld für Bauteile, wie z.B. USB, computerüblichen Anschlüsse, KAT-Buchsen, HDMI, ausgerüstet sein kann.

Das erfindungsgemäße Dosengehäuse 1 kann, unabhängig davon, ob sich der Deckel 3 und/oder mindestens ein Verschluss 5 verdrehen lässt, aus unterschiedlichen Materialien gefertigt sein, so dass z.B. eine Küchenausführung in hochwertiger Zinkdruckguss Abdeckung in Edelstahl-Optik und eine Officeausführung in eloxierter Optik hergestellt wird.

Vorteilhaft ist, unabhängig davon, ob sich der Deckel 3 und/oder mindestens ein Verschluss 5 verdrehen lässt, die minimale Einbautiefe des in dem Ausführungsbeispiel dargestellten erfindungsgemäßen Dosengehäuses 1, das bevorzugt von beiden Seiten (Front und Rückseite) an der nicht dargestellten Arbeitsplatte befestigbar ist und durch Entrasten der Verschlüsse 5 durch die Bedienvorrichtung 6 und einer Drehung des Deckels 3 in zwei sicher verrastete Endpositionen (geöffneter Zustand (Steckdosen 8 bedienbar), geschlossener Zustand (Steckdosen 8 abgedeckt)) bringbar ist. Bevorzugt sind der Deckel 3 und die Verschlüsse 5 derart ausgestaltet, dass das erfindungsgemäße Dosengehäuse 1 im verschlossenen Zustand dicht ist, so dass kein Dreck oder Feuchtigkeit in das Innere des erfindungsgemäßen Dosengehäuse 1 eindringen kann. Dadurch ist das erfindungsgemäße Dosengehäuse 1 abwischbar. Bevorzugt hat das erfindungsgemäße Dosengehäuse 1, das auf der nicht dargestellten Arbeitsplatte, in der es nur ein kleines Bohrloch von beispielsweise 105 mm benötigt, plan aufliegt und das Bohrloch mit einem Kragen überragt, einen sehr flachen Aufbau, der eine Tischplatte beispielsweise um nur 3 mm überragt, so dass es nur wenige mm aufträgt. Durch die geringe Einbautiefe (z.B. 40 mm) ist das erfindungsgemäße Dosengehäuse 1 z.B. in Küchenarbeitsplatten komplett versenkbar und somit auch über Schubladen einsetzbar. Selbstverständlich kann das erfindungsgemäße Dosengehäuse 1 auch in Wände, Decken oder Böden eingebaut werden.

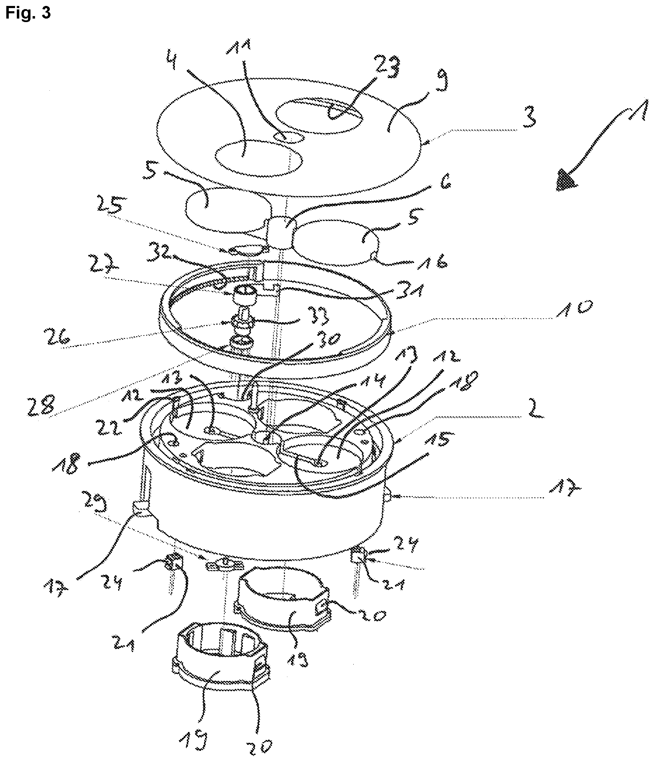

Fig. 3 zeigt eine perspektivische Explosionsdarstellung eines erfindungsgemäßen Dosengehäuses 1. Der Deckel 3 weist eine Deckelscheibe 9 und eine als Führungsring 10 ausgestaltete Führung auf. Dadurch sind der Führungsring 10 und die Deckelscheibe 9 unabhängig voneinander montierbar. In der Deckelscheibe 9 des Deckels 3 sind die Öffnungen 4 und eine Öffnung 11, in der die Bedienvorrichtung 6, die mit den Verschlüssen 5 verbunden ist, angeordnet ist. Im Innenraum des Gehäuses 2 befinden sich zwei Vertiefungen 12, die beim Herunterdrücken der Bedienvorrichtung 6 die Verschlüsse 5 aufnehmen. In der Vertiefung 12 ist ein Dom 13 (Zapfen) angeordnet, über den eine nicht dargestellte Feder (Druckfeder) stülpbar ist, die von unten gegen den Verschluss 5 wirkt. Für die Bedienvorrichtung 6 ist ebenfalls ein Dom 14 (Zapfen) vorgesehen, der ebenfalls für den Einbau einer nicht dargestellten Feder (Druckfeder) dienen kann und ggfls. als Führung für die Bedienvorrichtung 6 dient, so dass diese nicht verkanten kann. Bevorzugt sind die Vertiefungen 12 durch einen Kanal 15 miteinander verbunden, um eventuell in das erfindungsgemäße Dosengehäuse 1 eingedrungene Flüssigkeit zu einem Wasserablauf abzuleiten. Bei Betätigung der Bedienvorrichtung 6 sind die Verschlüsse 5 somit axial aus den Öffnungen 4 herausdrückbar, wodurch der Deckel 3 verdreht werden kann. Sobald eine Verdrehung des Deckels 3 dazu führt, dass die Öffnungen 4 deckungsgleich zu den Verschlüssen 5 sind, springen die Verschlüsse 5 aufgrund deren Federbelastung automatisch in die Öffnungen 4, so dass diese verschlossen werden. Hierbei dienen an den Verschlüssen 5 angeordnete Nasen 16 als Anschlag an der Unterseite der Deckelscheibe 9, so dass der Verschluss 5 an der Oberseite des Deckels 3 plan positioniert ist.

Das erfindungsgemäße Dosengehäuse 1 wird, unabhängig davon, ob sich der Deckel 3 und/oder mindestens ein Verschluss 5 verdrehen lässt, nachdem es beispielsweise in eine in einer Tischplatte angeordneten Bohrung eingeführt wurde, durch Anziehen von Befestigungselementen 17, z.B. Spannkrallen, die eine Fixierung des erfindungsgemäßen Dosengehäuses 1 von oben ermöglichen, an der Tischplatte fixiert. Im geschlossenen Zustand weist das erfindungsgemäße Dosengehäuse 1 eine geschlossene Oberfläche auf, so dass ein Zugang 18 zu einem Befestigungselement 17 verdeckt ist. Durch Verdrehen des Deckels 3 und/oder mindestens eines Verschlusses 5 werden die Zugänge 18 zugänglich, so dass die Befestigungselementen 17, z.B. Spannkrallen, an einer Tischplatte, mit einer Dicke von z. B. 15 - 40 mm verschraubt werden können.

Von unten sind in das Gehäuse 2 verschiedene wechselbare Doseneinsätze 19, z. B. Steckdoseneinsätze, mittels eines Rastmechanismus 20 einsetzbar, um das erfindungsgemäße Dosengehäuse 1 an die Bedürfnisse des Verwenders anzupassen.

Des Weiteren sind von unten in das Gehäuse 2 Verriegelungsvorrichtungen 21 einsetzbar, mittels denen die Deckelscheibe 9 an dem Gehäuse 2 drehbeweglich angeordnet werden kann. Bevorzugt wird hierzu die Deckelscheibe 9 in Wirkverbindung mit dem Führungsring 10, der mittels Rasthaken 22 an dem Gehäuse 2 drehbar gehalten wird, gebracht, um anschließend die Deckelscheibe 9, die eine Nut 23 aufweist, in die zur Verriegelung ein Riegel 24 einer Verriegelungsvorrichtung 21 eingeschoben wird, mittels der Verriegelungsvorrichtung 21 zu verriegeln. Die Verriegelungsvorrichtungen 21 dienen somit dazu, dass die Deckelscheibe 9 oder bei einstückigen Deckeln 3 der gesamte Deckel 3 abnehmbar ist, so dass er z. B. bei Beschädigung leicht ausgetauscht werden kann.

Des Weiteren weist das erfindungsgemäße Dosengehäuse 1 einen Antrieb in Form eines Federmechanismus auf, der aus einem Federmechanismusdeckel 25, einer Federachse 26, einer Feder 27, z. B. einer Konstantkraftfeder, einem Kugellager 28 und einem Rotationsdämpfer 29 besteht. Im vorliegenden Ausführungsbeispiel ist der Federmechanismus seitlich in einer Öffnung 30 angeordnet, wobei ein Federende 31 an dem Führungsring 10, der einen Zahnkranz 32 aufweist, der mit einem an der Federachse 26 angeordneten Zahnrad 33 in Wirkverbindung bringbar ist, angeordnet ist.

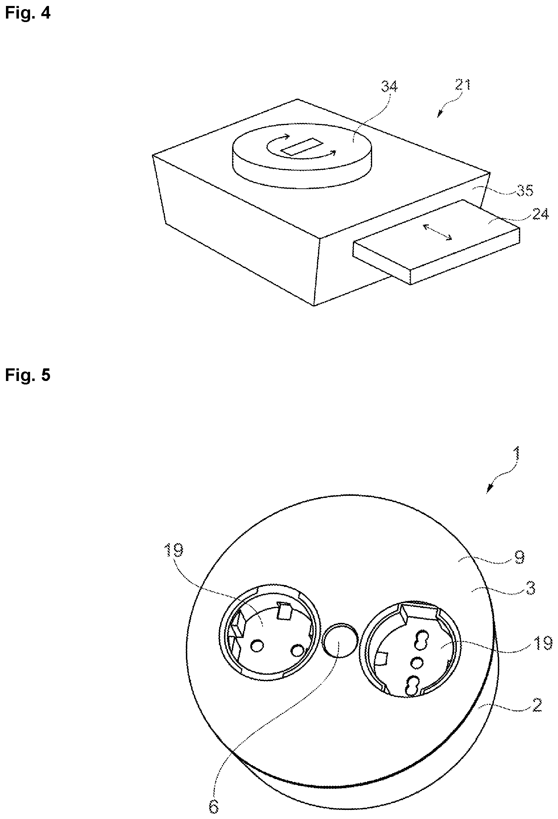

Fig.4, nicht durch Ansprüche abgedeckt, zeigt eine perspektivische Darstellung einer Verriegelungsvorrichtung 21 des Dosengehäuses 1, gemäß Fig. 1. Die Verriegelungsvorrichtung 21 weist einen Riegel 24, der in Pfeilrichtung hin- und herbewegbar ist, auf, der durch Drehen des Schaftes 34 in Pfeilrichtung aus dem Gehäuse 35 zum Eingriff in die in Fig. 3 dargestellte Nut 23 herausgeschoben bzw. in das Gehäuse 35 zurückgezogen werden kann.

Fig. 5 zeigt skizzenhaft eine perspektivische Darstellung des erfindungsgemäßen Dosengehäuses 1 im geöffneten Zustand.

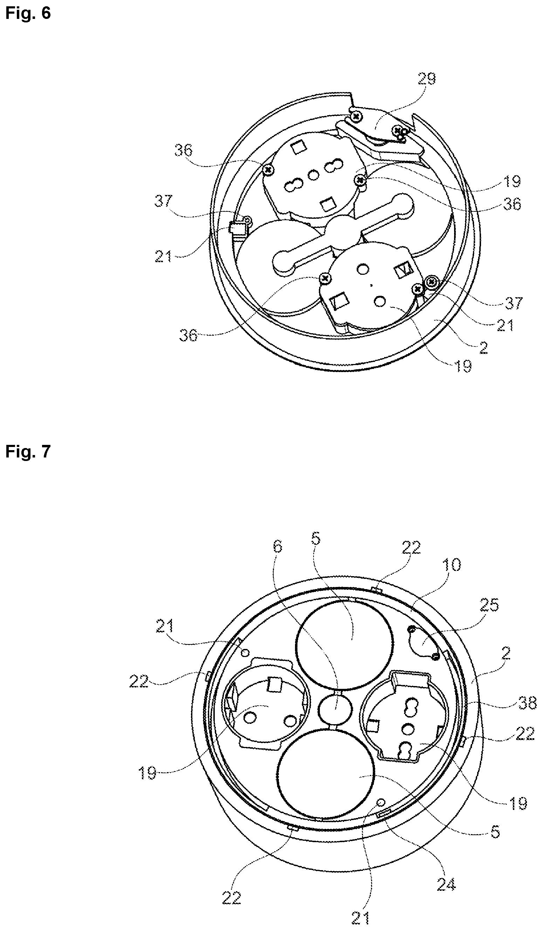

Fig.6, nicht durch Ansprüche abgedeckt, zeigt skizzenhaft eine perspektivische Darstellung einer Unterseite des Dosengehäuses 1, gemäß Fig. 5. Die Doseneinsätze 19 sind bevorzugt mittels Schrauben an dem Gehäuse 2 fixiert. Ebenso sind die Verriegelungsvorrichtungen 21 mittels Schrauben 35 gesichert.

Fig.7, nicht durch Ansprüche abgedeckt, zeigt skizzenhaft eine perspektivische Darstellung des Dosengehäuses 1, gemäß Fig. 5, ohne die in Fig. 3 dargestellte Deckelscheibe 9. Das Gehäuse 2 ist die Hauptkomponente und somit das größte Teil des erfindungsgemäßen Dosengehäuses 1. Das Gehäuse 2 weist eine Aussparung 38 auf, in die der Führungsring 10 eingesetzt werden kann, um ihn anschließend mit den vier Rasthaken 22 an dem Gehäuse 4 zu verrasten, so dass der Führungsring 10 bevorzugt auch nicht mehr entfernt werden kann. Damit wird beim Abnehmen der Deckelscheibe 9 der Federmachanismus geschützt, wodurch ein versehentliches Demontieren oder Beschädigen der Bauteile verhindert wird. Öffnungen 39 dienen als Zugang zu dem in Fig. 4 gezeigten Schaft 34, um den Riegel 24 zur Verriegelung des Deckels 3 zu bewegen.

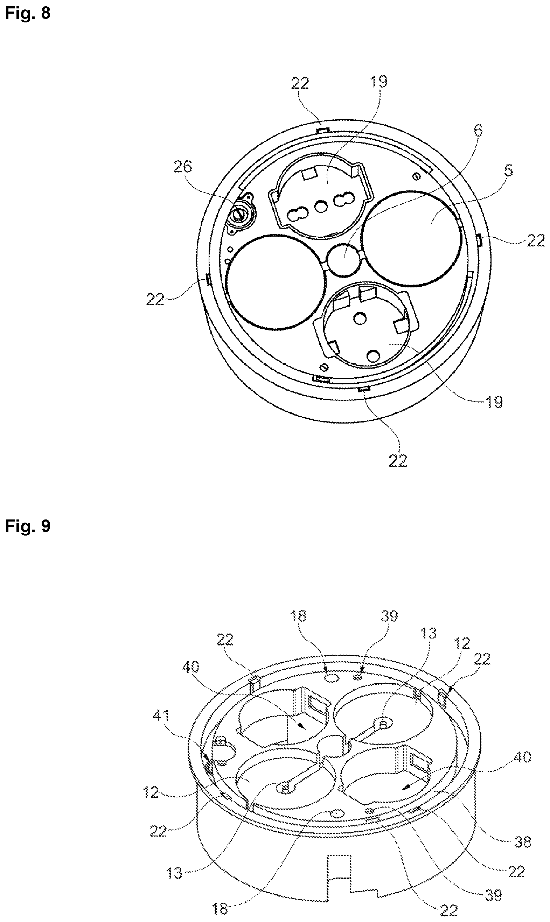

Fig. 8 zeigt skizzenhaft eine perspektivische Darstellung des erfindungsgemäßen Dosengehäuses 1, gemäß Fig. 5, ohne die in Fig. 3 dargestellte Deckelscheibe 9, ohne den in Fig. 3 dargestellten Federmechanismusdeckel 25 und ohne die in Fig. 3 dargestellte Feder 28.

Fig. 9 zeigt eine perspektivische Darstellung eines Gehäuses 2 des erfindungsgemäßen Dosengehäuses 1, gemäß Fig. 3. Die in Fig. 3 gezeigten Doseneinsätze 19 werden von unten an den vorgesehenen Aussparungen 40 verklipst oder verschraubt. Dadurch kann für jede Dosenkombination bzw. Steckdosenkombination das gleiche Grundgehäuse (Gehäuse 2) verwendet werden. Ein Loch 41 dient zur Aufnahme des in Fig. 3 gezeigten Kugellagers 28 und der darin versehenen Federachse 26. Öffnungen 39, als Zugang zu dem in Fig. 4 gezeigten Schaft 34, und Öffnungen 42, in denen sich der in Fig. 4 gezeigte Riegel 24 bewegen kann, dienen für die Verriegelung des Deckels 3 und die Zugänge 18 dienen für die Montage des erfindungsgemäßen Dosengehäuses 1 an einer Arbeitsplatte.

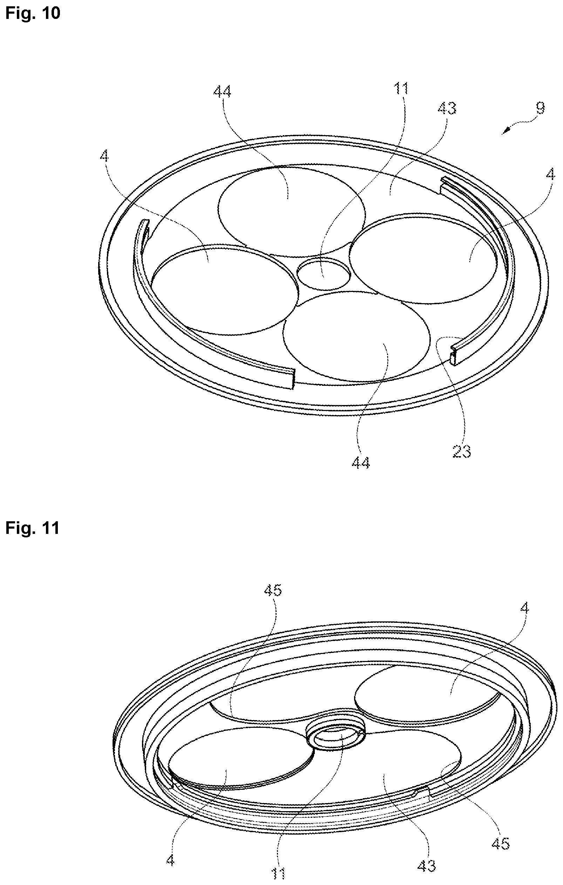

Fig.10, nicht durch Ansprüche abgedeckt, zeigt eine perspektivische Darstellung einer Unterseite 43 der Deckelscheibe 9 des Dosengehäuses 1, gemäß Fig. 3. Die Deckelscheibe 9 ist nach dem Öffnen der Verriegelungsvorrichtung 21 abnehmbar und/oder wechselbar. Dabei bietet das erfindungsgemäße Dosengehäuses 1 den Vorteil, dass die Deckelscheibe 9 abgenommen werden kann, ohne den Federmechanismus dadurch zu beeinträchtigen. Zur Lösung bzw. Fixierung der Deckelscheibe 9 ist an der Unterseite 43 der Deckelscheibe 9 eine Nut 23 angebracht, in die ein Riegel (Schieber) der Verriegelungsvorrichtung 21 zur Verriegelung eingeschoben wird.

Die Deckelscheibe 9 weist an ihrer Unterseite 43 Vertiefungen 44 auf, in die die Verschlüsse 5 bei Verdrehung des Deckels 3 bei aufgrund der Federbelastung der Verschlüsse 5 automatisch einrasten. Um den Deckel 3 anschließend weiter verdrehen zu können, muss die Bedienvorrichtung 6 gedrückt werden, so dass die Verschlüsse 5 aus den Vertiefungen 44 herausbewegt werden.

Fig.11, nicht durch Ansprüche abgedeckt, zeigt eine perspektivische Darstellung einer Unterseite 43 eines weiteren Ausführungsbeispiels einer Deckelscheibe 9 eines Dosengehäuses 1. Bei diesem Ausführungsbeispiel weist die Unterseite 43 für die Verschlüsse 5 Anschläge 45 auf, wodurch der Deckel 3 solange in eine Richtung verdreht werden kann, bis ein Verschluss 5 an einem Anschlag 45 anschlägt. Anschließend ist nur eine Verdrehung des Deckels 3 in die andere Drehrichtung möglich.

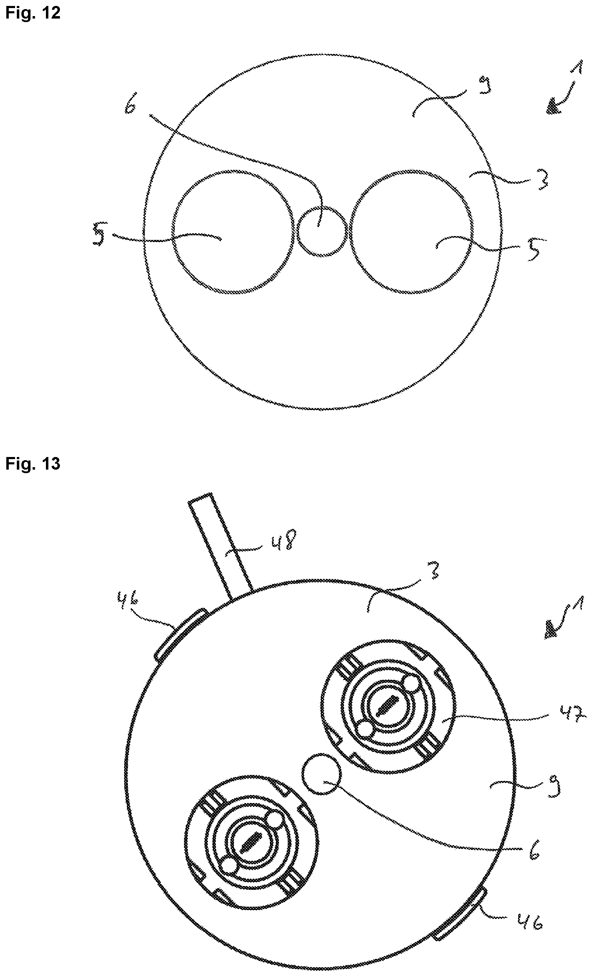

Fig. 12 zeigt eine Draufsicht des erfindungsgemäßen Dosengehäuses 1, gemäß Fig. 1, von oben.

Fig.13, nicht durch Ansprüche abgedeckt, zeigt eine Draufsicht eines weiteren Ausführungsbeispiels eines Dosengehäuses 1. Bei diesem Ausführungsbeispiel ist zusätzlich zu der Bedienvorrichtung 6, die ein Verdrehen des Deckels 3 ermöglicht, mindestens ein Schaltarm 46 angeordnet, wobei ein Schaltarm 46 mit einem im Innenraum des Gehäuses 2 angeordneten Steckdosengehäuse 47 verbunden ist. Dabei ist das Steckdosengehäuse 47, das eine Zuleitung 48 aufweist, drehbar an dem Gehäuse 2 angeordnet, wobei die Drehung durch den Schaltarm 46 erfolgt. Dies bewirkt, dass bevor oder nachdem der Deckel 3 derart verdreht wurde, dass ein Zugang zum Innenraum des erfindungsgemäßen Dosengehäuses 1 möglich ist, zusätzlich durch den Verwender durch Drehung des Steckdosengehäuses 47 durch den Verwender eine Auswahl der gewünschten Dose getroffen werden kann. Denkbar wäre auch, dass bei diesem Ausführungsbeispiel die Bedienvorrichtung 6 mit dem Steckdosengehäuse 47 und der Schaltarm 46 mit dem Deckel 3 verbunden ist, so dass eine Betätigung der Bedienvorrichtung 6 eine Verdrehung des Steckdosengehäuses 47 (bevorzugt nebst mindestens eines Verschlusses 5) und eine Betätigung des Schaltarms 46 ein Verdrehen des Deckels 3 bewirkt.

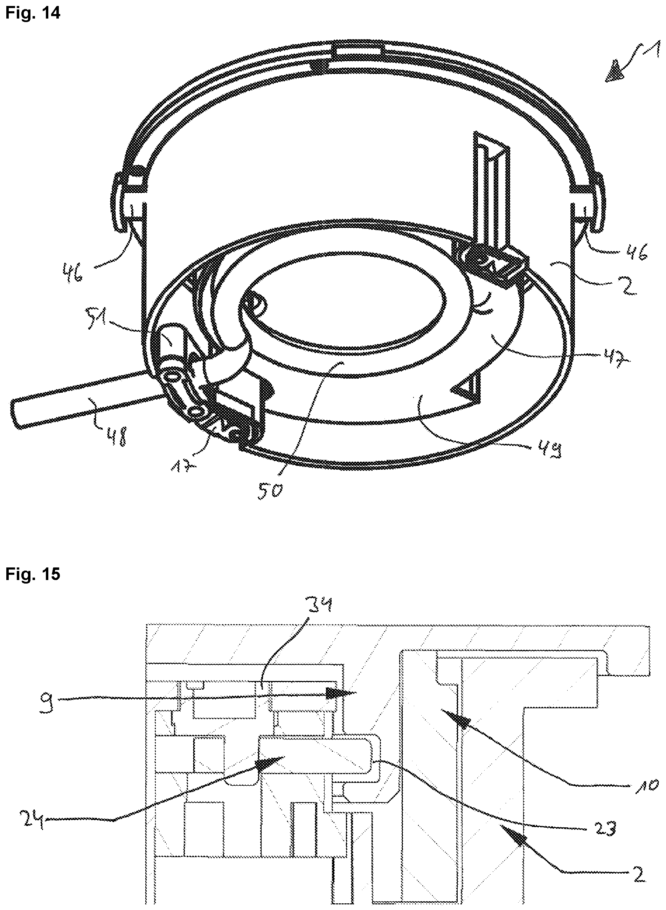

Fig.14, nicht durch Ansprüche abgedeckt, zeigt eine perspektivische Darstellung einer Unterseite des Dosengehäuses 1, gemäß Fig. 13. Eine Zuleitung 48, die beispielsweise eine Stromzuleitung sein kann, wird im Inneren des Steckdosengehäuses 47 zugentlastet in axialer Richtung durch den Steckdosenboden 49 und mit einer Schlaufe 50 in radialer Richtung abgehend an einer Zugentlastung 51 am äußeren Gehäuse 2 erneut befestigt. Somit ist eine Verdrehung des Steckdosengehäuses 13 gut möglich und die Zuleitung wird parallel zur Tischunterseite in Pfeilrichtung 24 weggeführt. Selbstverständlich können auch mehrere Leitungen aus dem Inneren des Steckdosengehäuses 49 herausgeführt werden.

Fig.15, nicht durch Ansprüche abgedeckt, zeigt eine Schnittansicht des Deckels 3 und der Verriegelungsvorrichtung 21 eines Dosengehäuses 1. Die Verriegelungsvorrichtung 21 wird von unten befestigt und ist von oben mit einem Werkzeug, beispielsweise einem Schlitzschraubendreher, zu betätigen. Wird der Deckel 3 von oben eingebaut und der Riegel 23 (Verriegelungsschieber) ausgefahren, sitzt der Deckel 3 fest in dem Gehäuse 2, so dass er ggfls. nur noch verdreht werden kann.

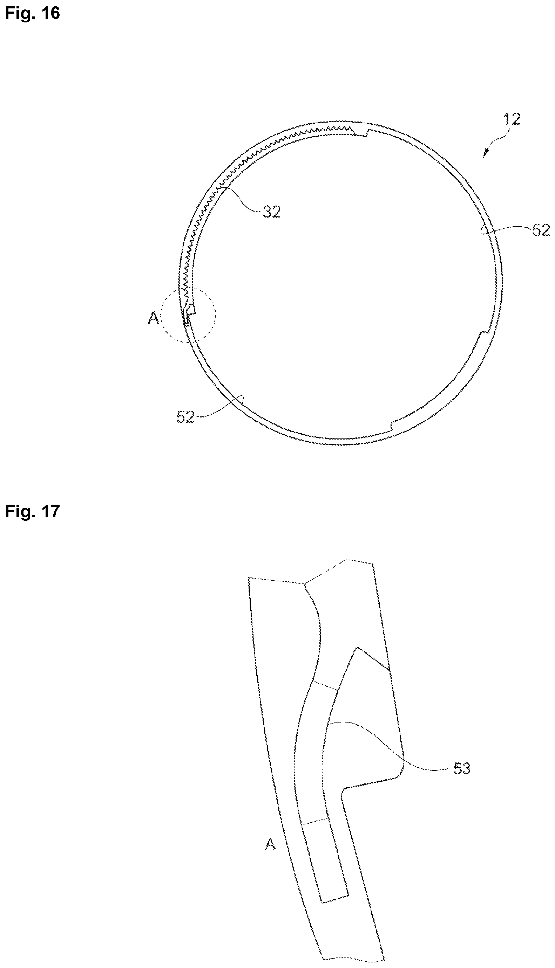

Fig.16, nicht durch Ansprüche abgedeckt, zeigt eine Draufsicht auf einen Führungsring 10 eines Deckels 3 eines Dosengehäuses 1, von unten. Der Führungsring 10 bildet ein mit dem Federmechanismus zusammenwirkendes Teil. Der Führungsring 10 hat zwei größere Aussparungen 52. In diese wird die Deckelscheibe 9 eingeschoben. Somit wird die Rotationsbewegung des Führungsrings 10 mit der Feder 27 an die Deckelscheibe 9 weitergegeben. Von der Unterseite des Führungsrings 10 ist eine Verzahnung (Zahnkranz 32) zu sehen. Diese Verzahnung überträgt die Rotationsbewegung an die Federachse 26, die das dementsprechende Zahnrad 33 aufweist. Um die Rotationsbewegung der Feder abzudämpfen, ist an der Federachse 26 ein Rotationsdämpfer 29 montiert. Dieser dämpft die Rotationsbewegung, die über die Verzahnung übertragen wird. Der Führungsring 10 wird in das Gehäuse 2 eingeklipst und kann anschließend bevorzugt nicht mehr entfernt werden.

Fig.17, nicht durch Ansprüche abgedeckt, zeigt eine Schnittansicht einer Lasche 53 für eine Feder 27, insbesondere eine Konstantkraftfeder, gemäß Ausschnitt A aus Fig, 16. In die Lasche 53 wird die Konstantkraftfeder eingeführt und befestigt wird.

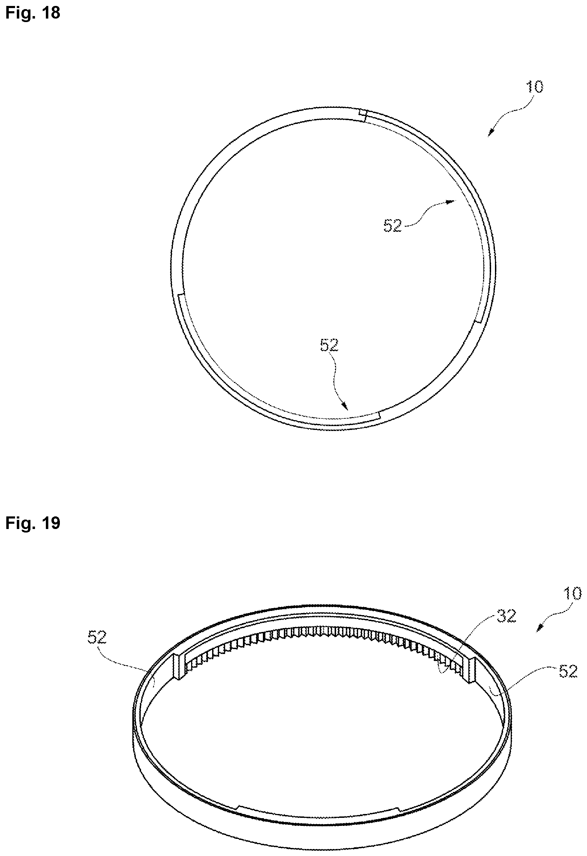

Fig.18, nicht durch Ansprüche abgedeckt, zeigt eine Draufsicht auf einen Führungsring 10 eines Deckels 3 eines Dosengehäuses 1, von oben.

Fig.19, nicht durch Ansprüche abgedeckt, zeigt eine perspektivische Darstellung auf den Führungsring 10 des Deckels 3 eines Dosengehäuses 1, gemäß Fig. 18.

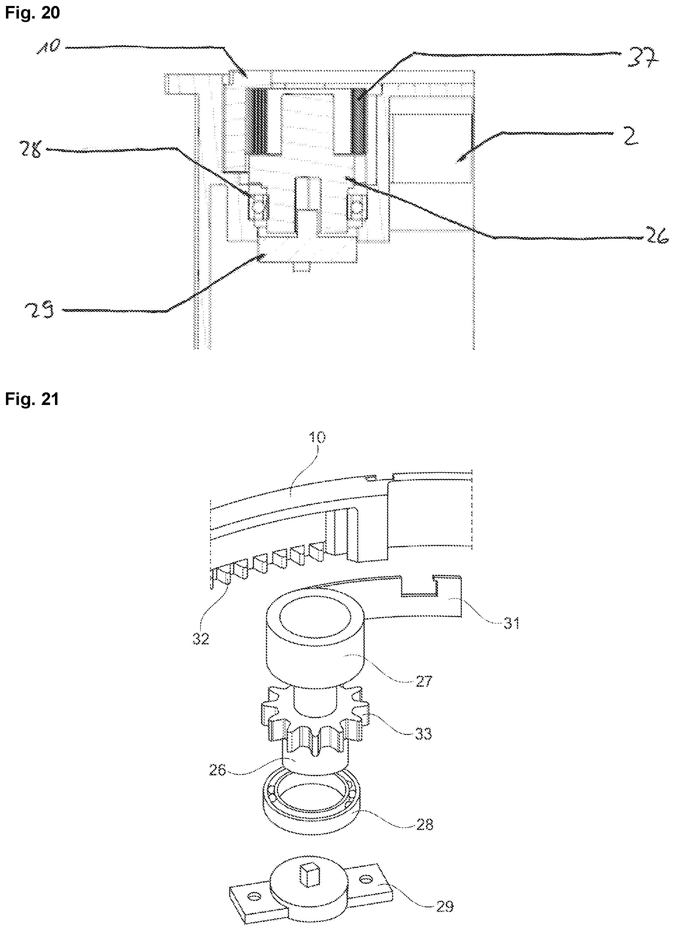

Fig. 20 zeigt eine Schnittansicht eines Federmechanismus eines erfindungsgemäßen Dosengehäuses 1. Bei der Feder 27 (Konstantkraftfeder) handelt es sich um ein vorgespanntes flaches Band aus Federmaterial, das in Windungen mit praktisch konstantem Radius um sich selbst oder um eine Trommel geformt wird. Wenn das Band auseinandergezogen (ausgelenkt) wird, widersteht die Eigenspannung wie bei einer normalen Zugfeder der Belastungskraft, allerdings mit nahezu konstanter Kraft. Diese Eigenschaften eignen sich für den Einbau in das erfindungsgemäße Dosengehäuse 1.

Der Federmechanismus, der mit dem Führungsring 10 zusammenwirkt, besteht aus der Feder 27, der Federachse 26, dem Kugellager 28 und dem Rotationsdämpfer 29. Das Kugellager 28 wird in das Gehäuse 2 gepresst. In das Kugellager 28 wird die Federachse 26 eingesetzt, so dass sich die Federachse 26 leicht drehen lässt. Die Konstantkraftfeder wird auf die "Federachse 26 aufgesteckt und kann sich dort frei drehen. Von der Unterseite des Gehäuses 2 wird die Drehachse des Rotationsdämpfers 29 an die Federachse 26 befestigt. Um ein Mitdrehen des Rotationsdämpfers 29 zu verhindern, ist dieser zusätzlich an dem Gehäuse 2 montiert. Durch ein manuelles Zudrehen des Deckels 3, wird die Konstantkraftfeder aufgezogen (abgerollt) und gespannt. Dadurch entsteht die Kraft, die den Deckel 3 wieder automatisch öffnen lässt. Somit ist die Feder 28 im geschlossenen Zustand gespannt. Im verschlossenen Zustand ist mindestens ein Verschluss 5 in einer Öffnung 4 eingerastet, wodurch das erfindungsgemäße Dosengehäuse 1 geschlossen gehalten wird. Beim Runterdrücken der Bedienvorrichtung 6 löst sich diese Verbindung und der Deckel 3 wird durch die Federkraft der gespannten Feder 28 verdreht, wodurch das erfindungsgemäße Dosengehäuse 1 geöffnet wird. Denkbar wäre auch der umgekehrte Fall, so dass die manuelle Verdrehung und die damit einhergehende Spannung der Feder 28 beim Öffnen des erfindungsgemäßen Dosengehäuses 1 erfolgt, so dass sich durch Betätigung der Bedienvorrichtung 6 eine im geöffneten Zustand vorhandene Verbindung löst und der Deckel 3 durch die Federkraft der gespannten Feder 28 das erfindungsgemäße Dosengehäuse 1 schließt.

Fig.21, nicht durch Ansprüche abgedeckt, zeigt eine perspektivische Explosionsdarstellung des Federmechanismus eines Dosengehäuses 1, gemäß Fig. 20.

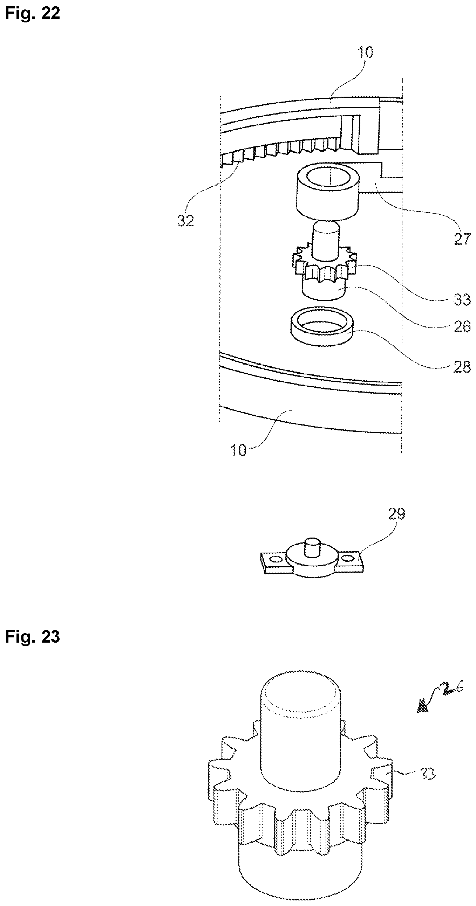

Fig.22, nicht durch Ansprüche abgedeckt, zeigt eine weitere perspektivische Explosionsdarstellung des Federmechanismus eines Dosengehäuses 1, gemäß Fig. 20,

Fig.23, nicht durch Ansprüche abgedeckt, zeigt eine perspektivische Darstellung einer Federachse 26 des Federmechanismus eines Dosengehäuses 1, gemäß Fig. 20.

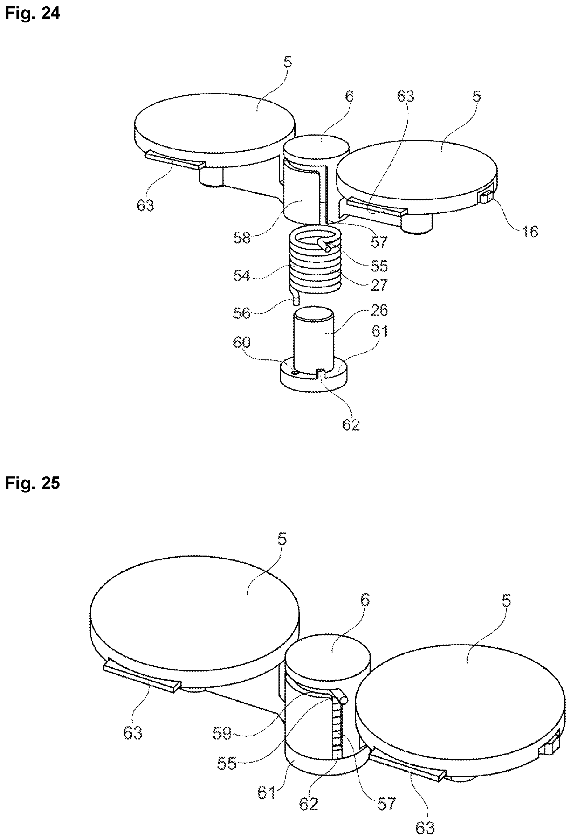

Fig.24, nicht durch Ansprüche abgedeckt, zeigt eine perspektivische Explosionsdarstellung eines weiteren Ausführungsbeispiels eines Federmechanismus eines Dosengehäuses 1. In diesem Ausführungsbespiel ist der Federmechanismus in die Bedienvorrichtung 6 integriert. Dabei weist die Feder 27 (Schraubenfeder 54) einen radialen Schenkel 55 und einen axialen Schenkel 56 auf. Der radiale Schenkel 55 der Schraubenfeder 54, der durch einen Schlitz 57 in einen Zylinder 58 der Bedienvorrichtung 6 einführbar ist, ist im eingesetzten in einem Langloch 59 beweglich angeordnet. Der eine axiale Schenkel 56 ist in eine Bohrung 60 eines Bodens 61 einer Federachse 26 eingeführt und gehalten. Der Boden 61 kann auch ein separates Teil sein, das an die Federachse 26 einklipst oder mit Schrauben fixiert wird. Der Boden 61 weist eine Nase 62 auf, die zur Fixierung in den Schlitz 57 eingeführt wird, wodurch verhindert wird, dass sich die Feder 27 entspannen kann.

An den Verschlüssen 5 angeordnete Nasen 63 dienen als Anschlag an der Unterseite der Deckelscheibe 9, so dass der Verschluss 5 an der Oberseite des Deckels 3 plan positioniert ist.

Fig.25, nicht durch Ansprüche abgedeckt, zeigt eine perspektivische Darstellung des Federmechanismus eines Dosengehäuses 1, gemäß Fig. 24. Bei Betätigung Bedienvorrichtung 6 wird der Federmechanismus nebst Schraubenfeder 54 nach unten gedrückt.

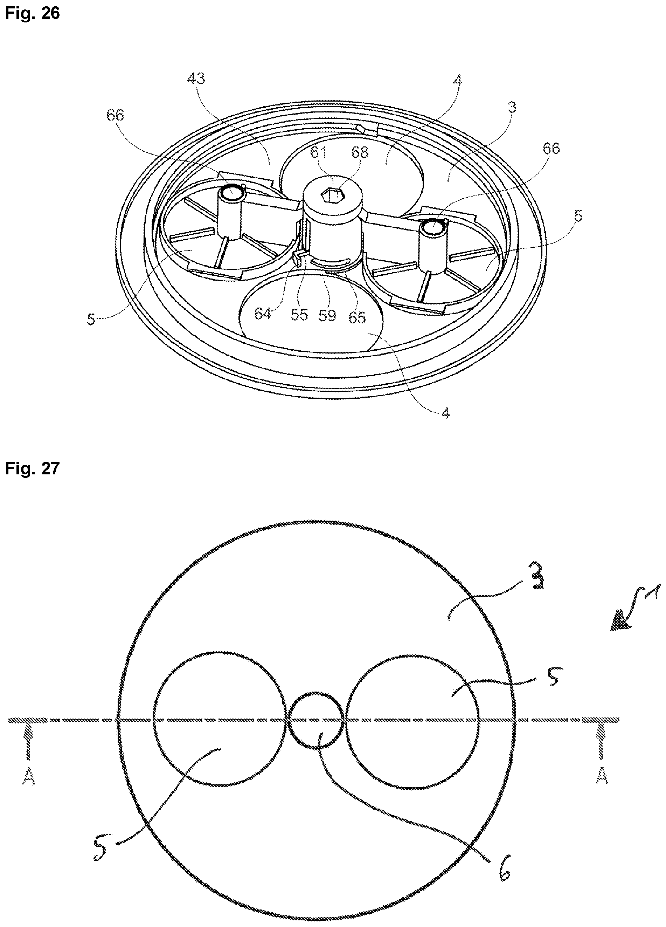

Fig.26, nicht durch Ansprüche abgedeckt, zeigt eine perspektivische Darstellung der Unterseite 43 einer Deckelscheibe 9, an der ein Federmechanismus eines Dosengehäuses 1, gemäß Fig. 25, angeordnet ist. Der radiale Schenkel 55 ist in einer an der Unterseite 43 der Deckelscheibe 9 angeordneten Halterung 64 angeordnet, wobei die Halterung 64 so tief ist, dass der radiale Schenkel 55 bei der Abwärtsbewegung der Bedienvorrichtung 6 nicht aus der Halterung 64 geführt wird. wird. Sofern das erfindungsgemäße Dosengehäuse 1 eine Verdrehbarkeit der Verschlüsse vorsieht, könnte der Federmechanismus z. B. derart aufgebaut sein, dass eine Halterung des radialen Schenkels an dem Gehäuse und nicht an der Unterseite der deckelscheibe angeordnet ist. Hierzu müsste der Zylinder angepasst werden, da die Feder bevorzugt andersherum in den Zylinder eingefügt werden würde.

Dadurch, dass der radiale Schenkel 55 in der Halterung 64 festgelegt ist und nur eine axiale Bewegung vollführen kann, wird durch eine von unten gesehene Verdrehung der Deckelscheibe 9 gegen den Uhrzeigersinn, die manuell durch den Verwender erfolgt, der radiale Schenkel 55 innerhalb des Langlochs 59 bis maximal zum Anschlag 65 bewegt, wodurch die Feder 27 gespannt wird. Sobald die Verschlüsse 5 die Öffnungen 4 erreicht haben, verrasten die Verschlüsse 5 durch nicht dargestellte in Öffnungen 66 angeordnete Federn innerhalb der Öffnungen 4, wodurch die Feder 27 gespannt bleibt. Durch erneutes Betätigen der Bedienvorrichtung 6 wird mittels der gespannten Feder 27 durch deren Federkraft eine von unten gesehene Verdrehung der Deckelscheibe 9 im Uhrzeigersinn der radiale Schenkel 55 innerhalb des Langlochs 59 vom Anschlag 65 weg bewegt. Die Drehbewegung endet bevorzugt spätestens, wenn die Verschlüsse 5 die an der Unterseite 43 der Deckelscheibe 9 angeordneten Vertiefungen 44 erreichen und in dienen federbelastet einrasten. Die Deckelscheibe 9 wird somit zum Öffnen durch die Federkraft angetrieben.

Im vorliegenden Ausführungsbeispiel ermöglicht das Langloch 59 eine Verdrehung des Deckels 3 um 90°.

Der Boden 61 weist eine Stirnseite 67 auf, an der ein Innensechskant 68 angeordnet ist, der dazu dient, dass Schraubenfeder 54 vor der Einführung in den Schlitz 57 vorgespannt werden kann. Zusätzlich wäre auch denkbar, dass der Innensechskant 68 zur Aufnahme einer Feder für den die Betätigungsvorrichtung 6 dient, damit sich diese wieder in die Ausgangsposition bewegt.

Fig. 27 zeigt eine Draufsicht auf die Deckelscheibe 9 eines Deckels 3 eines erfindungsgemäßen Dosengehäuses 1, von oben.

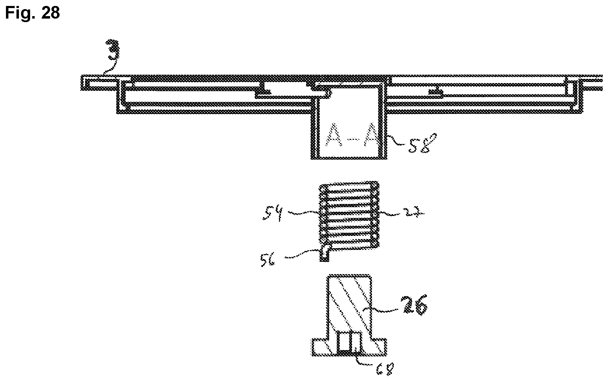

Fig.28, nicht durch Ansprüche abgedeckt, zeigt eine Schnittansicht des Federmechanismus, gemäß Fig. 24, entlang der Linie A - A.

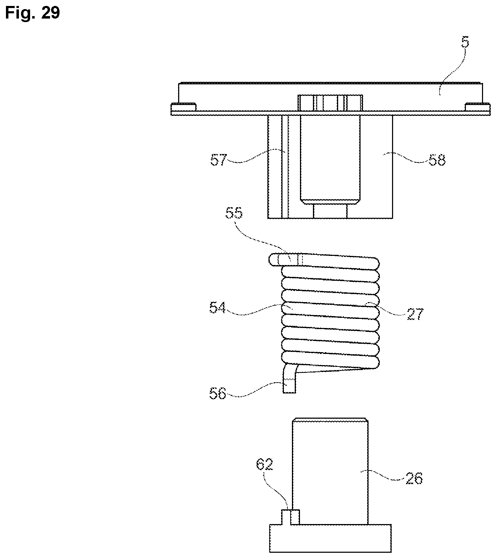

Fig.29, nicht durch Ansprüche abgedeckt, zeigt eine Seitenansicht des Federmechanismus, gemäß Fig. 24.

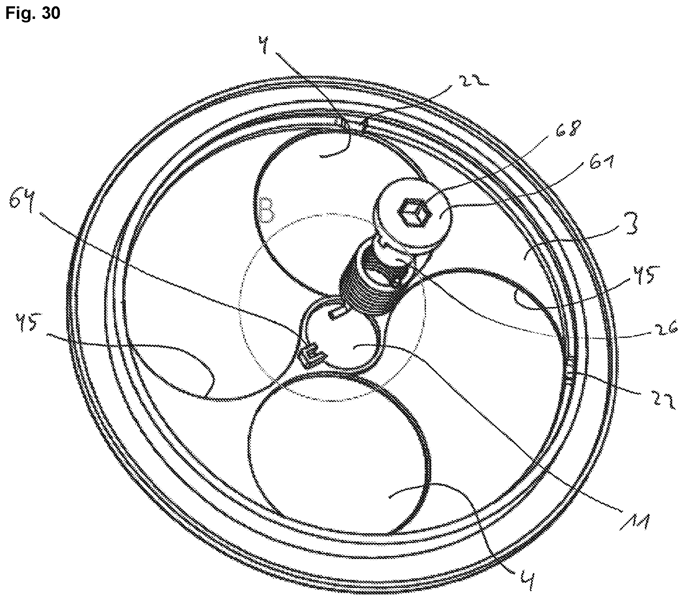

Fig.30, nicht durch Ansprüche abgedeckt, zeigt eine perspektivische Darstellung einer Unterseite 43 der Deckelscheibe 9 nebst Feder 27 (Schraubenfeder 54) und Boden 54.

Dadurch, dass der radiale Schenkel 55 in der Halterung 64 festgelegt ist und nur eine axiale Bewegung vollführen kann, wird durch eine von unten gesehene Verdrehung der Deckelscheibe 9 im Gegensatz zu Fig. 26 im Uhrzeigersinn, die manuell durch den Verwender erfolgt, der radiale Schenkel 55 innerhalb des Langlochs 59 bis maximal zum Anschlag 65 bewegt, wodurch die Feder 27 gespannt wird. Sobald die Verschlüsse 5 die Öffnungen 4 erreicht haben, verrasten die Verschlüsse 5 innerhalb der Öffnungen 4, wodurch die Feder 27 gespannt bleibt. Durch erneutes Betätigen der Bedienvorrichtung 6 wird mittels der gespannten Feder 27 durch deren Federkraft eine von unten gesehene Verdrehung der Deckelscheibe 9 gegen den Uhrzeigersinn der radiale Schenkel 55 innerhalb des Langlochs 59 vom Anschlag 65 weg bewegt. Die Drehbewegung endet bevorzugt spätestens, wenn die Verschlüsse 5 die an der Unterseite 43 der Deckelscheibe 9 angeordneten Anschläge 45 erreichen. Die Deckelscheibe 9 wird somit zum Öffnen durch die Federkraft angetrieben.

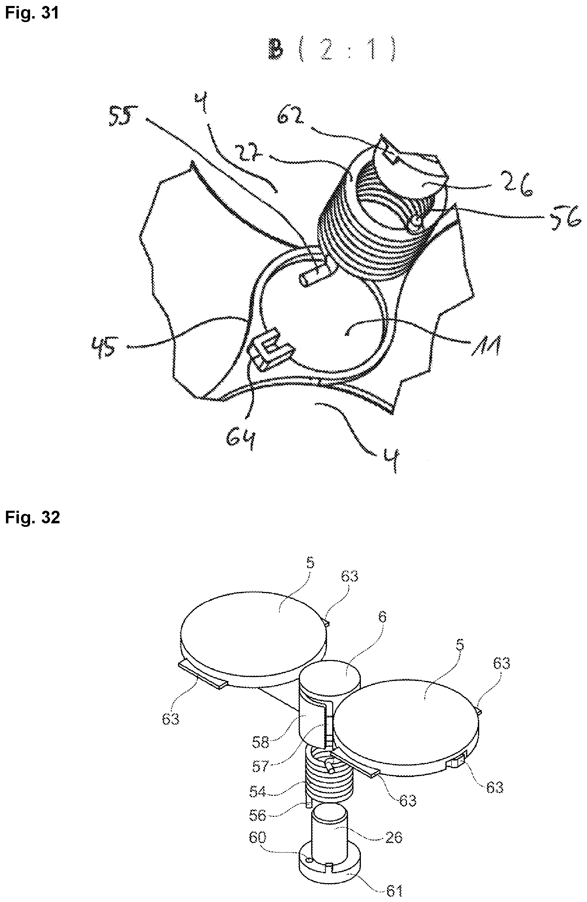

Fig.31, nicht durch Ansprüche abgedeckt, zeigt eine perspektivische Detailansicht, gemäß Ausschnitt B aus Fig. 30.

Fig. 32 zeigt eine perspektivische Explosionsdarstellung eines Federmechanismus eines erfindungsgemäßen Dosengehäuses 1.

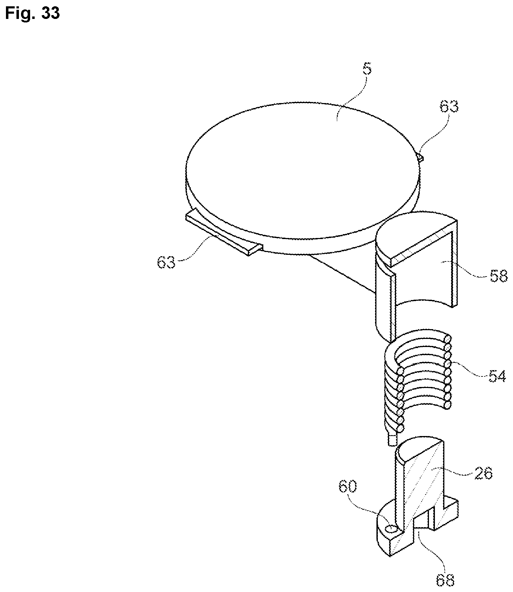

Fig. 33 zeigt eine perspektivische Schnittansicht des Federmechanismus, gemäß Fig. 32.

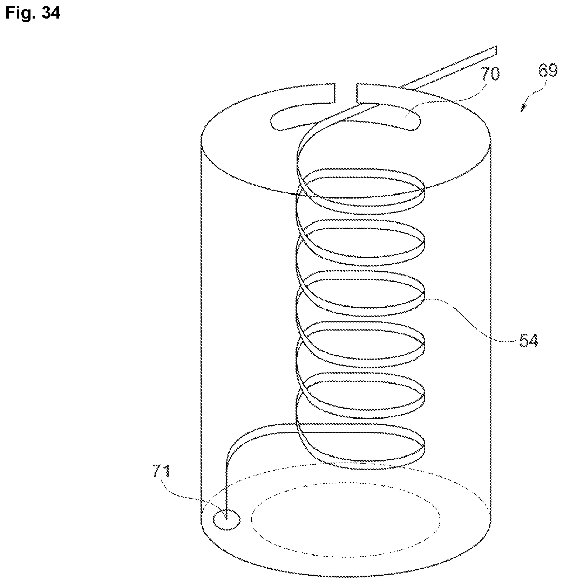

Flg.34, nicht durch Ansprüche abgedeckt, zeigt eine perspektivische Skizze einer Hülle 69 für eine Feder 27. Die Hülle 69 stellt ein eigenes Bauteil dar, in dem die Feder 27 gefasst ist, so dass deren radialer Schenkel beweglich in einem Langloch 70 und deren axiale Schenkel fixiert in einer Bohrung 71 angeordnet sind. Durch die Hülle 69 wird die Feder 27 gegen ein axiales Einknicken geschützt. Vorteilhaft ist, dass eine derart gekapselte Feder 27 beim Einsetzen auf ein definiertes Drehmoment vorgespannt werden kann. Damit ist das Federelement auf ein definiertes Drehmoment vorgespannt und kann einfach und ungefährlich eingesetzt bzw. entnommen werden.

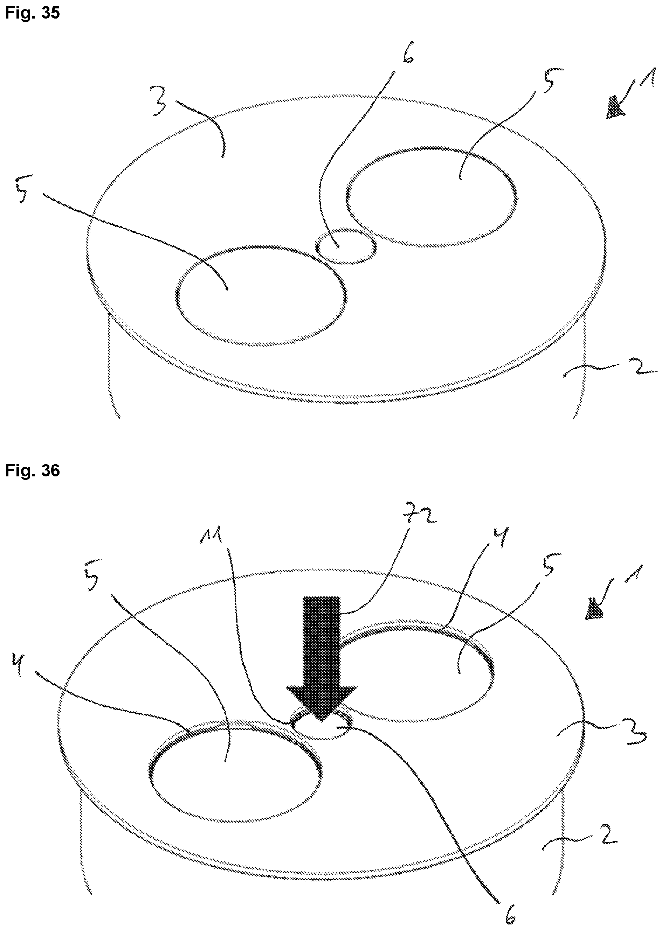

Fig. 35 zeigt eine perspektivische Darstellung eines erfindungsgemäßen Dosengehäuses 1.

Fig. 36 zeigt eine perspektivische Darstellung des erfindungsgemäßen Dosengehäuses 1, gemäß Fig. 35, bei Betätigung einer Bedienvorrichtung 6 in Pfeilrichtung 72.

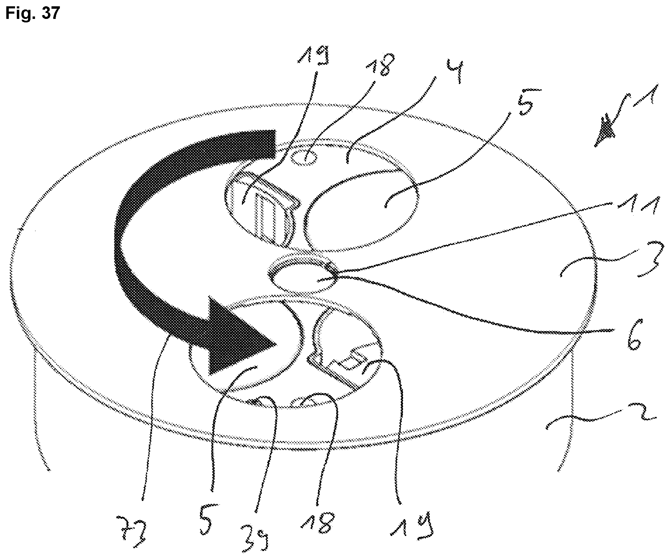

Fig. 37 zeigt eine perspektivische Darstellung des erfindungsgemäßen Dosengehäuses 1, gemäß Fig. 35, bei Drehung des Deckels 3. Durch Betätigung der Bedienvorrichtung 6 wird der Deckel 3 beim Drücken eines Knopfes mittels einer Feder 28 und einem Rotationsdämpfer 29 automatisch in Pfeilrichtung 73 gedreht.

Alle in der Beschreibung, den nachfolgenden Ansprüchen und den Zeichnungen dargestellten Merkmale können sowohl einzeln als auch in beliebiger Kombination miteinander erfindungswesentlich sein.

### Bezugszahlenliste

- 1: Dosengehäuse
- 2: Gehäuse
- 3: Deckel
- 4: Öffnung
- 5: Verschluss
- 6: Bedienvorrichtung
- 7: Exzenterschraube
- 8: Steckdose
- 9: Deckelscheibe
- 10: Führungsring
- 11: Öffnung
- 12: Vertiefung
- 13: Dom
- 14: Dom
- 15: Kanal
- 16: Nase
- 17: Befestigungselement
- 18: Zugang
- 19: Doseneinsatz
- 20: Rastmechanismus
- 21: Verriegelungsvorrichtung
- 22: Rasthaken
- 23: Nut
- 24: Riegel
- 25: Federmechanismusdeckel
- 26: Federachse
- 27: Feder
- 28: Kugellager
- 29: Rotationsdämpfer
- 30: Öffnung
- 31: Federende

- 32: Zahnkranz
- 33: Zahnrad
- 34: Schaft
- 35: Gehäuse
- 36: Schraube
- 37: Schraube
- 38: Aussparung
- 39: Öffnung
- 40: Aussparung
- 41: Loch
- 42: Öffnung
- 43: Unterseite
- 44: Vertiefung
- 45: Anschlag
- 46: Schaltarm
- 47: Steckdosengehäuse
- 48: Zuleitung
- 49: Steckdosenboden
- 50: Schlaufe
- 51: Zugentlastung
- 52: Aussparung
- 53: Lasche
- 54: Schraubenfeder
- 55: Radialer Schenkel
- 56: Axialer Schenkel
- 57: Schlitz
- 58: Zylinder
- 59: Langloch
- 60: Bohrung
- 61: Boden
- 62: Nase
- 63: Nase
- 64: Halterung

- 65: Anschlag
- 66: Öffnung
- 67: Stirnseite
- 68: Innensechskant
- 69: Hülle
- 70: Langloch
- 71: Bohrung
- 72: Pfeilrichtung
- 73: Pfeilrichtung

## Patentansprüche

1. Dosengehäuse (1),
- mit einem mindestens teilweise geschlossenen Gehäuse (2), wobei das Gehäuse (2) mindestens einen Innenraum aufweist, in dem mindestens eine Steckdose (8) und/oder mindestens ein Informationsanschluss und/oder mindestens ein Schalter untergebracht ist, wobei an mindestens einer Seite des Gehäuses (2) ein Deckel (3) angeordnet ist, der einen Innenraum abdeckt und der mindestens eine durch einen Verschluss (5) verschließbare Öffnung (4) aufweist, wobei mindestens eine Öffnung (4) eine die Öffnung (4) verschließende Sperrstellung und eine die Öffnung (4) freigebende Freigabestellung aufweist und wobei der Deckel (3) und/oder mindestens ein Verschluss (5) zum Freigeben oder zum Sperren mindestens einer Öffnung (4) beweglich an dieser Seite des Gehäuses (2) angeordnet ist,
- mit mindestens einer Bedienvorrichtung (6), durch die mindestens ein Verschluss (5) direkt oder indirekt aus einer eine die Öffnung (4) verschließende Verschlussstellung in eine die Öffnung (4) freigebende Freigabestellung bzw. aus einer die Öffnung (4) freigebende Freigabestellung in eine die Öffnung (4) verschließende Verschlussstellung bewegbar ist,
**dadurch gekennzeichnet,**
**dass** der Deckel (3) und/oder ein in einem Innenraum angeordnetes Steckdosengehäuse (47) für mindestens eine Steckdose (8) und/oder mindestens ein Informationsanschluss und/oder mindestens ein Schalter oder der Deckel (3) und mindestens ein Verschluss (5) um eine auf den Innenraum ausgerichtete Drehachse in mindestens eine Drehrichtung drehbar an dieser Seite des Gehäuses (2) angeordnet ist und das Dosengehäuse (1) mindestens einen Antrieb aufweist, der die Drehbewegung des Deckels (3) und/oder des Steckdosengehäuses (47) oder des Deckels (3) und des mindestens einen Verschlusses (5) beim Freigeben oder Sperren mindestens einer Öffnung (4) in mindestens eine Drehrichtung unterstützt.

2. Dosengehäuse (1), nach Anspruch 1,
**dadurch gekennzeichnet,**
**dass** mindestens ein Antrieb ein Federmechanismus oder ein Elektroantrieb ist.

3. Dosengehäuse (1), nach einem der vorhergehenden Ansprüche,
**dadurch gekennzeichnet,**
**dass** das Dosengehäuse (1) ein Mehrfachsteckdosengehäuse, ein Aufputzdosengehäuse oder ein Einbaugehäuse ist.

4. Dosengehäuse (1), nach einem der vorhergehenden Ansprüche,
**dadurch gekennzeichnet,**
**dass** die Drehachse des Deckels (3) und/oder mindestens eines Verschlusses (5) senkrecht auf den Innenraum ausgerichtet ist.

5. Dosengehäuse (1), nach einem der vorhergehenden Ansprüche,
**dadurch gekennzeichnet,**
**dass** der Deckel (3) und/oder mindestens ein Verschluss (5) in eine Drehrichtung oder in beide Drehrichtungen durch mindestens einen Antrieb verdrehbar ist.

6. Dosengehäuse (1), nach einem der vorhergehenden Ansprüche,
**dadurch gekennzeichnet,**
**dass** der Deckel (3) und/oder mindestens ein Verschluss (5) in eine Drehrichtung oder in beide Drehrichtungen manuell verdrehbar ist.

7. Dosengehäuse (1), nach einem der vorhergehenden Ansprüche,
**dadurch gekennzeichnet,**
**dass** das Dosengehäuse (1) zur Begrenzung der Drehung mindestens einen Anschlag aufweist.

8. Dosengehäuse (1), nach einem der vorhergehenden Ansprüche,
**dadurch gekennzeichnet,**
**dass** mindestens ein Antrieb zentral oder dezentral an der Seite des Gehäuses (2) angeordnet ist.

9. Dosengehäuse (1), nach einem der vorhergehenden Ansprüche,
**dadurch gekennzeichnet,**
**dass** der Deckel (3) einteilig und unter Beibehaltung der Drehfähigkeit des Deckels (3) mittels mindestens einer Verriegelungsvorrichtung (21) mit dem Gehäuse (2) verbunden ist und/oder ist der Deckel (3) mehrteilig und unter Beibehaltung der Drehfähigkeit des Deckels (3) mindestens ein Teil des Deckels (3) mittels mindestens einer Verriegelungsvorrichtung (21) mit dem Gehäuse (2) verbunden ist.

10. Dosengehäuse (1), nach einem der vorhergehenden Ansprüche,
**dadurch gekennzeichnet,**
**dass** der Deckel (3) eine Deckelscheibe (9) und/oder eine Führung aufweist.

11. Dosengehäuse (1), nach einem der vorhergehenden Ansprüche,
**dadurch gekennzeichnet,**
**dass** mindestens eine Steckdose (8) und/oder mindestens ein Informationsanschluss und/oder mindestens ein Schalter als auswechselbarer Einsatz ausgestaltet ist.

12. Dosengehäuse (1), nach einem der vorhergehenden Ansprüche,
**dadurch gekennzeichnet,**
**dass** mindestens ein Verschluss (5) einer Öffnung (4) an dem Gehäuse (2) angeordnet ist.

13. Dosengehäuse (1), nach einem der vorhergehenden Ansprüche,
**dadurch gekennzeichnet,**
**dass** mindestens ein Verschluss (5) und/oder mindestens eine Bedienvorrichtung (6) eine Feder aufweist.

14. Dosengehäuse (1), nach einem der vorhergehenden Ansprüche,
**dadurch gekennzeichnet,**
**dass** mindestens eine Bedienvorrichtung (6) zumindest teilweise außerhalb des Gehäuses (2) angeordnet und/oder mindestens eine Bedienvorrichtung (6) zumindest teilweise eine dem Innenraum abgewandte Oberseite des Deckels (3) überragt.

15. Dosengehäuse (1), nach einem der vorhergehenden Ansprüche,
**dadurch gekennzeichnet,**
**dass** in mindestens einem Innenraum ein Steckdosengehäuse (47) für mindestens eine Steckdose (8) und/oder mindestens ein Informationsanschluss und/oder mindestens ein Schalter angeordnet ist.

16. Dosengehäuse (1), nach einem der vorhergehenden Ansprüche,
**dadurch gekennzeichnet,**
**dass** das Steckdosengehäuse (47) mit mindestens einem drehbaren Verschluss (5) verbunden ist.

17. Dosengehäuse (1), nach einem der vorhergehenden Ansprüche,
**dadurch gekennzeichnet,**
**dass** das Dosengehäuse (1) eine geringe Einbautiefe, insbesondere eine Einbautiefe von 40 mm, aufweist.

18. Verfahren zur Bedienung eines Dosengehäuses (1), das ein mindestens teilweise geschlossenen Gehäuse (2) und mindestens eine Bedienvorrichtung (6) aufweist, wobei das Gehäuse (2) mindestens einen Innenraum aufweist, in dem mindestens eine Steckdose (8) und/oder mindestens ein Informationsanschluss und/oder mindestens ein Schalter untergebracht ist, wobei an mindestens einer Seite des Gehäuses (2) ein Deckel (3) angeordnet ist, der einen Innenraum abdeckt und der mindestens eine durch einen Verschluss (5) verschließbare Öffnung (4) aufweist, wobei mindestens eine Öffnung (4) eine die Öffnung (4) verschließende Sperrstellung und eine die Öffnung (4) freigebende Freigabestellung aufweist und wobei der Deckel (3) und/oder mindestens ein Verschluss (5) zum Freigeben oder zum Sperren mindestens einer Öffnung (4) beweglich an dieser Seite des Gehäuses (2) angeordnet ist, und wobei durch Betätigung mindestens einer Bedienvorrichtung (6) mindestens ein Verschluss (5) direkt oder indirekt aus einer eine die Öffnung (4) verschließende Verschlussstellung in eine die Öffnung (4) freigebende Freigabestellung bzw. aus einer die Öffnung (4) freigebende Freigabestellung in eine die Öffnung (4) verschließende Verschlussstellung verbracht wird,
**dadurch gekennzeichnet,**
**dass** der Deckel (3) und/oder ein in einem Innenraum angeordnetes Steckdosengehäuse (47) für mindestens eine Steckdose (8) und/oder mindestens ein Informationsanschluss und/oder mindestens ein Schalter oder der Deckel (3) und mindestens ein Verschluss (5) um eine auf den Innenraum ausgerichtete Drehachse in mindestens eine Drehrichtung drehbar an dieser Seite des Gehäuses (2) angeordnet ist und das Dosengehäuse (1) mindestens einen Antrieb aufweist, der die Drehbewegung des Deckels (3) und/oder des Steckdosengehäuses (47) oder des Deckels (3) und des mindestens einen Verschlusses (5) beim Freigeben oder Sperren mindestens einer Öffnung (4) in mindestens eine Drehrichtung zumindest zeitweise unterstützt.

19. Verfahren, nach Anspruch 18,
**dadurch gekennzeichnet,**
**dass** bei Bewegung des Deckels (3) und/oder des Steckdosengehäuses (47) oder des Deckels (3) und mindestens eines Verschlusses (5) mindestens ein Antrieb zumindest teilweise gespannt oder zumindest teilweise entspannt wird.

20. Verfahren, nach Anspruch 18 oder Anspruch 19,
**dadurch gekennzeichnet,**
**dass** nach der erstmaligen Betätigung der Bedienvorrichtung (6), durch den der Deckel (3) und/oder das Steckdosengehäuse (47) oder der Deckel (3) und mindestens ein Verschluss (5) in eine Drehrichtung bewegt wird, mindestens durch eine erneute Betätigung der Bedienvorrichtung (6) der Deckel (3) und/oder das Steckdosengehäuse (47) oder der Deckel (3) und mindestens ein Verschluss (5) in die selbe Drehrichtung bewegt wird.

21. Verfahren, nach einem der Ansprüche 18 bis 20,
**dadurch gekennzeichnet,**
**dass** der Deckel (3), mindestens ein Teil des Deckels (3) und/oder mindestens ein Verschluss (5) austauschbar ist.

22. Verfahren, nach einem der Ansprüche 18 bis 21,
**dadurch gekennzeichnet,**
**dass** mindestens eine Öffnung (4) eine die Öffnung (4) verschließende Sperrstellung und eine die Öffnung (4) freigebende Freigabestellung aufweist, wobei zum Wechsel zwischen der Sperrstellung und der Freigabestellung bzw. der Freigabestellung und der Sperrstellung der Deckel (3) und/oder ein Steckdosengehäuse (47) oder der Deckel (3) und mindestens ein Verschluss (5) bewegt werden.

23. Verfahren, nach einem der Ansprüche 18 bis 22,
**dadurch gekennzeichnet,**
**dass** als Dosengehäuse (1) ein Dosengehäuse (1), gemäß einem der Ansprüche 1 bis 17, eingesetzt wird.

## Claims

1. A socket housing (1)
- including an at least partially closed housing (2), said housing (2) having at least one interior space accommodating at least one plug socket (8) and/or at least one information socket and/or at least one switch, at least one side of the housing (2) having a cover (3) arranged thereon which covers an interior space and is provided with at least one opening (4) that may be closed by a closure (5), at least one opening (4) having a locking position in which said opening (4) is closed and a release position in which said opening (4) is accessible, and the cover (3) and/or at least one closure (5) for giving access to, or for closing off, at least one opening (4) being movably arranged on said side of the housing (2),
- including at least one operating device (6) by means of which at least one closure (5) may be moved directly or indirectly from a closure position in which said opening (4) is closed into a release position in which said opening (4) is accessible or, vice versa, from a release position in which said opening (4) is accessible into a closure position in which said opening (4) is closed,
**characterised in that**
the cover (3) and/or a plug socket housing (47) for at least one plug socket (8) arranged in an interior space and/or at least one information socket and/or at least one switch, or said cover (3) and at least one closure (5) are arranged on said side of the housing (2) in such a manner as to be rotatable in at least one sense of rotation about a rotation axis that is oriented towards said interior space, and **in that** the socket housing (1) has at least one drive mechanism that assists the rotary movement of the cover (3) and/or the plug socket housing (47), or of the cover (3) and said at least one closure (5) in at least one sense of rotation during release and close-off operations of at least one opening (4).

2. The socket housing (1) as claimed in claim 1,
**characterised in that**
at least one drive mechanism is a spring mechanism or an electric drive.

3. The socket housing (1) as claimed in any of the preceding claims,
**characterised in that**
the socket housing (1) is a multiple plug socket housing, a surface-mounted socket housing or a flush-mounted socket housing.

4. The socket housing (1) as claimed in any of the preceding claims,
**characterised in that**
the axis of rotation of the cover (3) and/or of at least one closure (5) is oriented perpendicularly with respect to the interior space.

5. The socket housing (1) as claimed in any of the preceding claims,
**characterised in that**
the cover (3) and/or at least one closure (5) may be rotated in one sense of rotation or in both senses of rotation by means of at least one drive mechanism.

6. The socket housing (1) as claimed in any of the preceding claims,
**characterised in that**
the cover (3) and/or at least one closure (5) may be manually rotated in one sense of rotation or in both senses of rotation.

7. The socket housing (1) as claimed in any of the preceding claims,
**characterised in that**
the socket housing (1) is provided with at least one stop for the purpose of limiting the scope of rotation.

8. The socket housing (1) as claimed in any of the preceding claims,
**characterised in that**
at least one drive mechanism is arranged on said side of the housing (2) in a central position or an out-of-centre position.

9. The socket housing (1) as claimed in any of the preceding claims,
**characterised in that**
the cover (3) is formed as a single piece and is connected to the housing (2) by means of at least one locking device (21) while the rotatability of said cover (3) is still maintained, and/or the cover (3) is in a multi-part design and at least one part of the cover (3) is connected to the housing (2) by means of at least one locking device (21) while the rotatability of the cover (3) is still maintained.

10. The socket housing (1) as claimed in any of the preceding claims,
**characterised in that**
the cover (3) has a cover disc (9) and/or a guide.

11. The socket housing (1) as claimed in any of the preceding claims,
**characterised in that**
at least one plug socket (8) and/or at least one information socket and/or at least one switch are configured as changeable inserts.

12. The socket housing (1) as claimed in any of the preceding claims,
**characterised in that**
at least one closure (5) of an opening (4) is arranged on the housing (2).

13. The socket housing (1) as claimed in any of the preceding claims,
**characterised in that**
at least one closure (5) and/or at least one operating device (6) are provided with a spring.

14. The socket housing (1) as claimed in any of the preceding claims,
**characterised in that**
at least one operating device (6) is arranged at least partially outside the housing (2) and/or **in that** at least one operating device (6) protrudes at least partially from a top surface of the cover (3) facing away from the interior space.

15. The socket housing (1) as claimed in any of the preceding claims,
**characterised in that**
at least one interior space has a plug socket housing (47) for accommodating at least one plug socket (8) and/or at least one information socket and/or at least one switch arranged therein.

16. The socket housing (1) as claimed in any of the preceding claims,
**characterised in that**
the plug socket housing (47) is connected to at least one rotatable closure (5).

17. The socket housing (1) as claimed in any of the preceding claims,
**characterised in that**
the socket housing (1) has a small installation depth, in particular an installation depth of 40 mm.

18. A method of operating a socket housing (1) which has an at least partially closed housing (2) and at least one operating device (6), said housing (2) having at least one interior space accommodating at least one plug socket (8) and/or at least one information socket and/or at least one switch, at least one side of the housing (2) having a cover (3) arranged thereon which covers an interior space and is provided with at least one opening (4) that may be closed by a closure (5), at least one opening (4) having a locking position in which said opening (4) is closed and a release position in which said opening (4) is accessible, and the cover (3) and/or at least one closure (5) for giving access to, or for closing off, at least one opening (4) being movably arranged on said side of the housing (2), and an actuation of at least one operating device (6) will move at least one closure (5) directly or indirectly from a closure position in which said opening (4) is closed into a release position in which said opening (4) is accessible or, vice versa, from a release position in which said opening (4) is accessible into a closure position in which said opening (4) is closed,
**characterised in that**
the cover (3) and/or a plug socket housing (47) for at least one plug socket (8) arranged in an interior space and/or at least one information socket and/or at least one switch, or said cover (3) and at least one closure (5) are arranged on said side of the housing (2) in such a manner as to be rotatable in at least one sense of rotation about a rotation axis that is oriented towards said interior space, and **in that** the socket housing (1) has at least one drive mechanism that assists at least temporarily the rotary movement of the cover (3) and/or the plug socket housing (47), or of the cover (3) and said at least one closure (5) in at least one sense of rotation during release and close-off operations of at least one opening (4).

19. The method as claimed in claim 18,
**characterised in that**
when the cover (3) and/or the plug socket housing (47) or said cover (3) and at least one closure (5) are moved, at least one drive mechanism is at least partially tensioned or at least partially untensioned.

20. The method as claimed in claim 18 or claim 19,
**characterised in that**
after the initial actuation of the operating device (6), by which the cover (3) and/or the plug socket housing (47) or said cover (3) and at least one closure (5) are moved in one sense of rotation, at least one renewed actuation of the operating device (6) will cause the cover (3) and/or the plug socket housing (47) or said cover (3) and at least one closure (5) to be moved in the same sense of rotation.

21. The method as claimed in any one of claims 18 to 20,
**characterised in that**
the cover (3), at least one part of said cover (3) and/or at least one closure (5) are replaceable.

22. The method as claimed in any one of claims 18 to 21,
**characterised in that**
at least one opening (4) has a locking position in which the opening (4) is closed and a release position in which said opening (4) is accessible, the cover (3) and/or a plug socket housing (47) or said cover (3) and at least one closure (5) being moved in order to operate a change between the locking position and the release position or, vice versa, between the release position and the locking position.

23. The method as claimed in any one of claims 18 to 22,
**characterised in that**
the socket housing (1) utilised here is a socket housing (1) as claimed in any one of claims 1 to 17.

## Revendications

1. Boîtier de prises (1),
- pourvu d'un boîtier (2) au moins partiellement fermé, le boîtier (2) présentant au moins un espace intérieur dans lequel est/sont logé(s) au moins une prise électrique (8) et/ou au moins un port d'information et/ou au moins un interrupteur, sur au moins une face du boîtier (2) étant disposé un couvercle (3) qui recouvre un espace intérieur et présente au moins une ouverture (4) pouvant être fermée par un dispositif de fermeture (5), au moins une ouverture (4) présentant une position de blocage qui bloque l'accès à l'ouverture (4) et une position de libération qui libère l'accès à ladite ouverture (4), et le couvercle (3) et/ou au moins un dispositif de fermeture (5) étant disposé(s) de manière mobile sur ladite face du boîtier (2) en vue de libérer ou de bloquer l'accès à au moins une ouverture (4),
- pourvu d'au moins un dispositif d'actionnement (6) permettant de faire passer de manière directe ou indirecte au moins un dispositif de fermeture (5) d'une position de fermeture qui ferme l'ouverture (4) à une position de libération qui libère ladite ouverture (4) ou d'une position de libération qui libère l'ouverture (4) à une position de fermeture qui ferme ladite ouverture (4),
**caractérisé en ce que**
le couvercle (3) et/ou un logement de prise électrique (47) disposé dans un espace intérieur et destiné à recevoir au moins une prise électrique (8), et/ou au moins un port d'information et/ou au moins un interrupteur ou bien le couvercle (3) et au moins un dispositif de fermeture (5) est/sont disposés sur ladite face du boîtier (2) de manière à pouvoir tourner au moins dans un sens de rotation autour d'un axe de rotation orienté vers l'espace intérieur, et **en ce que** le boîtier de prises (1) présente au moins un entraînement qui assiste le mouvement de rotation du couvercle (3) et/ou du logement de prise électrique (47) ou bien du couvercle (3) et dudit au moins un dispositif de fermeture (5) dans au moins un sens de rotation lors de la libération ou du blocage de l'accès à au moins une ouverture (4).

2. Boîtier de prises (1) selon la revendication 1,
**caractérisé en ce que**
au moins un entraînement est un mécanisme à ressort ou un entraînement électrique.

3. Boîtier de prises (1) selon l'une quelconque des revendications précédentes,
**caractérisé en ce que**
ledit boîtier de prises (1) est un boîtier multiprise, un boîtier pour montage en saillie ou un boîtier encastrable.

4. Boîtier de prises (1) selon l'une quelconque des revendications précédentes,
**caractérisé en ce que**
l'axe de rotation du couvercle (3) et/ou d'au moins un dispositif de fermeture (5) est/sont orienté(s) de manière perpendiculaire à l'espace intérieur.

5. Boîtier de prises (1) selon l'une quelconque des revendications précédentes,
**caractérisé en ce que**
il est possible de faire tourner le couvercle (3) et/ou au moins un dispositif de fermeture (5) dans un sens de rotation ou dans les deux sens de rotation grâce à au moins un entraînement.

6. Boîtier de prises (1) selon l'une quelconque des revendications précédentes,
**caractérisé en ce que**
il est possible de faire tourner le couvercle (3) et/ou au moins un dispositif de fermeture (5) dans un sens de rotation ou dans les deux sens de rotation de manière manuelle.

7. Boîtier de prises (1) selon l'une quelconque des revendications précédentes,
**caractérisé en ce que**
le boîtier de prises (1) présente au moins une butée en vue de limiter le mouvement de rotation.

8. Boîtier de prises (1) selon l'une quelconque des revendications précédentes,
**caractérisé en ce que**
au moins un entraînement est disposé de manière centrale ou de manière décentrée sur ladite face du boîtier (2).

9. Boîtier de prises (1) selon l'une quelconque des revendications précédentes,
**caractérisé en ce que**
le couvercle (3) est réalisé en une seule pièce et est relié au boîtier (2) au moyen d'au moins un dispositif de verrouillage (21) tout en conservant la capacité de rotation dudit couvercle (3), et/ou **en ce que** le couvercle (3) est réalisé en plusieurs pièces et au moins une partie du couvercle (3) est reliée au boîtier (2) au moyen d'au moins un dispositif de verrouillage (21) tout en conservant la capacité de rotation dudit couvercle (3).

10. Boîtier de prises (1) selon l'une quelconque des revendications précédentes,
**caractérisé en ce que**
le couvercle (3) présente un disque de recouvrement (9) et/ou un guide.

11. Boîtier de prises (1) selon l'une quelconque des revendications précédentes,
**caractérisé en ce que**
au moins une prise électrique (8) et/ou au moins un port d'information et/ou au moins un interrupteur sont respectivement conçus en tant qu'inserts échangeables.

12. Boîtier de prises (1) selon l'une quelconque des revendications précédentes,
**caractérisé en ce que**
au moins un dispositif de fermeture (5) d'une ouverture (4) est disposé sur le boîtier (2).

13. Boîtier de prises (1) selon l'une quelconque des revendications précédentes,
**caractérisé en ce que**
au moins un dispositif de fermeture (5) et/ou au moins un dispositif d'actionnement (6) présente(nt) un ressort.

14. Boîtier de prises (1) selon l'une quelconque des revendications précédentes,
**caractérisé en ce que**
au moins un dispositif d'actionnement (6) est disposé au moins partiellement à l'extérieur du boîtier (2) et/ou au moins un dispositif d'actionnement (6) dépasse au moins partiellement d'une face supérieure du couvercle (3) qui est opposée à l'espace intérieur.

15. Boîtier de prise (1) selon l'une quelconque des revendications précédentes,
**caractérisé en ce que**
un logement de prise électrique (47) destiné à recevoir au moins une prise électrique (8) et/ou au moins un port d'information et/ou au moins un interrupteur est disposé dans au moins un espace intérieur.

16. Boîtier de prises (1) selon l'une quelconque des revendications précédentes,
**caractérisé en ce que**
le logement de prise électrique (47) est relié à au moins un dispositif de fermeture (5) rotatif.

17. Boîtier de prises (1) selon l'une quelconque des revendications précédentes,
**caractérisé en ce que**
le boîtier de prises (1) présente une faible profondeur de montage, notamment une profondeur de 40 mm.

18. Procédé destiné à actionner un boîtier de prises (1) qui présente un boîtier (2) au moins partiellement fermé et au moins un dispositif d'actionnement (6), le boîtier (2) présentant au moins un espace intérieur dans lequel est/sont logé(s) au moins une prise électrique (8) et/ou au moins un port d'information et/ou au moins un interrupteur, sur au moins une face du boîtier (2) étant disposé un couvercle (3) qui recouvre un espace intérieur et présente au moins une ouverture (4) qui peut être fermée par un dispositif de fermeture (5), au moins une ouverture (4) présentant une position de blocage qui bloque l'accès à l'ouverture (4) et une position de libération qui libère l'accès à ladite ouverture (4), et le couvercle (3) et/ou au moins un dispositif de fermeture (5) étant disposé(s) de manière mobile sur ladite face du boîtier (2) en vue de libérer ou de bloquer l'accès à au moins une ouverture (4), et l'actionnement d'au moins un dispositif d'actionnement (6) permettant de faire passer de manière directe ou indirecte au moins un dispositif de fermeture (5) d'une position de fermeture qui ferme l'ouverture (4) à une position de libération qui libère ladite ouverture (4) ou bien d'une position de libération qui libère l'ouverture (4) à une position de fermeture qui ferme ladite ouverture (4),
**caractérisé en ce que**
le couvercle (3) et/ou un logement de prise électrique (47) disposé dans un espace intérieur et destiné à recevoir au moins une prise électrique (8) et/ou au moins un port d'information et/ou au moins un interrupteur ou bien le couvercle (3) et au moins un dispositif de fermeture (5) est/sont disposé(s) sur ladite face du boîtier (2) de manière à pouvoir tourner au moins dans un sens de rotation autour d'un axe de rotation orienté vers l'espace intérieur, et **en ce que** le boîtier de prises (1) présente au moins un entraînement qui assiste au moins temporairement le mouvement de rotation du couvercle (3) et/ou du logement de prise électrique (47) ou bien du couvercle (3) et dudit au moins un dispositif de fermeture (5) dans au moins un sens de rotation lors de la libération ou du blocage de l'accès à au moins une ouverture (4).

19. Procédé selon la revendication 18,
**caractérisé en ce que**
lors du déplacement du couvercle (3) et/ou du logement de prise électrique (47) ou bien du couvercle (3) et au moins d'un dispositif de fermeture (5), au moins un entraînement est au moins partiellement tendu ou au moins partiellement détendu.

20. Procédé selon la revendication 18 ou selon la revendication 19,
**caractérisé en ce que**
lorsque le dispositif d'actionnement (6) a été actionné une première fois, faisant ainsi bouger le couvercle (3) et/ou le logement de prise électrique (47) ou bien le couvercle (3) et au moins un dispositif de fermeture (5) dans un sens de rotation, au moins un nouvel actionnement dudit dispositif d'actionnement (6) fait bouger le couvercle (3) et/ou le logement de prise électrique (47) ou bien le couvercle (3) et au moins un dispositif de fermeture (5) dans le même sens de rotation.

21. Procédé selon l'une quelconque des revendications 18 à 20,
**caractérisé en ce que**
le couvercle (3), au moins une partie du couvercle (3) et/ou au moins un dispositif de fermeture (5) sont remplaçables.

22. Procédé selon l'une quelconque des revendications 18 à 21,
**caractérisé en ce que**
au moins une ouverture (4) présente une position de blocage qui bloque l'accès à l'ouverture (4) et une position de libération qui libère l'accès à ladite ouverture (4), le passage de la position de blocage à la position de libération ou de la position de libération à la position de blocage étant obtenu en faisant bouger le couvercle (3) et/ou un logement de prise électrique (47) ou bien le couvercle (3) et au moins un dispositif de fermeture (5).

23. Procédé selon l'une quelconque des revendications 18 à 22,
**caractérisé en ce que**
le boîtier de prises (1) utilisé est un boîtier de prises (1) selon l'une quelconque des revendications 1 à 17.
